# EUROPEAN PATENT SPECIFICATION

(11) **EP 2 090 602 B1**
(45) Date of publication and mention of the grant of the patent: **16.03.2016**
(21) Application number: 09161421.4
(22) Date of filing: 20.03.2002
(51) Int. Cl.: C08K 5/521, C08G 18/10, C08G 18/48, G02B 1/04, G02B 1/115

(54) **Transparent molded objects, optical member, plastic lens, and processes for producing these**
Transparente geformte Objekte, optisches Element, Kunststofflinse und Verfahren zu deren Herstellung
Objets moulés transparents, élément optique, lentille en plastique et leurs procédés de fabrication

(30) Priority: 21.03.2001 JP 2001081518; 21.03.2001 JP 2001081720; 01.02.2002 JP 2002025923; 01.02.2002 JP 2002025934; 01.02.2002 JP 2002025953
(43) Date of publication of application: 19.08.2009
(62) Divisional of application: 02705387.5
(73) Proprietor: Hoya Corporation, Tokyo 161-8525 (JP)
(72) Inventor: Kitahara, Yoshitaka, Tokyo 161-8525 (JP); Ohta, Hiroshi, Tokyo 161-8525 (JP); Kadota, Masanori, Tokyo 161-8525 (JP); Mitsuishi, Takeshi, Tokyo 161-8525 (JP); Shinde, Ken-ichi, Tokyo 161-8525 (JP); Kamura, Hitoshi, Tokyo 161-8525 (JP)
(74) Representative: Zimmermann & Partner Patentanwälte mbB

(56) References cited:
- JP-A- 3 287 641
- US-A- 5 594 088
- US-A- 6 010 778
- US-A- 6 127 505

## Description

### Technical Field

The present invention relates to transparent molded articles, such as lenses, and methods of manufacturing same. In particular, the present invention relates to transparent molded articles having good transparency and mold releasing property from a forming mold, comprising polyurea having intramolecular urethane bonds that are suited to optical applications, and a method of manufacturing same.

### Technical Background

Compared to glass, plastics are lighter, more crack resistant, and lend themselves more readily to dyeing. Thus, they are employed in optical applications such as various lenses, including eyewear lenses. Typical examples are polydiethylene glycol bisallylcarbonate and polymethyl methacrylate. However, these have a low refractive index of about 1.50 and a specific gravity of about 1.2 or more. Thus, for example, when employed in eyewear lenses, as the degree of magnification becomes greater, the thickness near the center of the lens and the edge thickness must be made thicker, running the risk of compromising one of the superior properties of plastics in the form of light weight. Although they have a lesser tendency to crack than glass, there is great need for even better resistance to cracking. In response, to further utilize characteristics of plastics that is light and crack resistant, polycarbonate obtained by injection molding and polythiourethane obtained by cast polymerization have begun to be employed in optical applications. Despite having extremely high strength, polycarbonate has low resistance to solvents, a common drawback of injection molded materials. And although polythiourethane does not exhibit the common drawback of injection molded materials, it is presently inferior in strength to polycarbonate.

Accordingly, to avoid the common drawbacks of injection molded materials, there is a need for a material that can be obtained by cast polymerization and has strength comparable to that of polycarbonate. Materials having such characteristics are known in the form of materials obtained by cast polymerizing an isocyanate terminal prepolymer having intramolecular urethane bonds with an aromatic diamine (US 5,962,617 A and US 6,127,505 A). A method of molding resin compositions comprising an isocyanate reactive polymer, a steric hindered aromatic diamine, and an internal mold releasing agent in the form of a fatty acid zinc salt is also known (JP 3-39533 B2).

However, the material disclosed in US 5,962,617 A has problems in that the aromatic diamine employed is solid at ordinary temperature and the polymerization reaction is rapid, resulting in residual melting and a molded article of low transparency. The material itself disclosed in US 6,127,505 A has adequate transparency as an optical material. However, when manufactured by cast polymerization, there remains a significant problem in the form of mold releasing properties.

Accordingly, the present inventors investigated polyurethane urea materials such as those disclosed in US 6,127,505 A with regard to improving the mold releasing property thereof by using various internal mold releasing agents together. They discovered that when silicone, fluorine, and metallic salt-based mold releasing agents commonly used for plastics or the acid phosphate alkyl esters disclosed in JP 1-163012 A and JP 64-45611 A were employed as internal mold releasing agents, there were problems such as reduced transparency due to haze and the like, reduced strength, and inadequate mold releasing properties. Improvement of mold releasing properties with the fatty acid zinc disclosed in JP 3-39533 B2 was also investigated. Since the molded products disclosed in JP 3-39533 B2 are themselves opaque, there is no problem if incorporating fatty acid zinc to a degree where adequate mold releasing properties are achieved. However, since the fatty acid zinc is present in the molded article in crystalline form, it scatters light, precluding the use of fatty acid zinc as an internal mold releasing agent in transparent molded articles in practice.

The material disclosed in US 6,127,505 A is a polyurea having intramolecular urethane bonds that can be cast polymerized and having strength comparable to that of polycarbonate. However, as described above, there is a problem in that adequate mold releasing properties cannot be achieved with common internal mold releasing agents during cast polymerization.

Accordingly, the first object of the present invention is to provide a molded article with good transparency and good mold releasing property from a forming mold that is suited to optical applications, and a method of manufacturing same.

Further, the material itself disclosed in US 6,127,505 A achieves adequate transparency as an optical material by devising an aromatic diamine that is a starting material. However, there is a major drawback in that yellowing caused by heat and light (particularly ultraviolet radiation) occurs during polymerization as the result of oxidation of the aromatic diamine.

To commute for this point, US 6,127,505 A describes the use of UV-absorbing agents, light stabilizers, and anti-oxidants. However, only common products are listed and there is no mention of specific formulation quantities and the like. As a result, this does not amount to an adequate countermeasure in practice, with yellowing caused by heat and light during polymerization remaining as a major problem.

Accordingly, the second object of the present invention is to provide a transparent molded article having good transparency, tending not to yellow due to heat and light, and having suitability to optical applications, that is a material obtained by cast polymerizing an isocyanate terminal prepolymer having an intramolecular urethane bond with an aromatic diamine, and a method of manufacturing same.

It is well known that an antireflective film is applied on a surface of a synthetic resin to improve surface refractive characteristics of an optical member composed of a synthetic resin. For example, JP 56-116003 A discloses an optical member comprising a substrate in the form of CR-39 (diethylene glycol bisallylcarbonate) resin and an antireflective film having, in sequence from the substrate, an underlayer comprised of SiO₂ 1.5 λ in film thickness, a first layer about 0.25 λ in total film thickness comprised of a two-layer equivalent film comprised of a ZrO₂ layer and a SiO₂ layer, a second layer about 0.50 λ in film thickness comprised of ZrO₂, and a third layer about 0.25 λ in film thickness comprised of SiO₂, on a CR-39 resin.

However, in contrast to glass substrates, resin substrates do not permit the formation of an antireflective film by raising the substrate temperature during vapor deposition. Thus, the ZrO₂ layer, for example, formed by vapor deposition does not have adequate heat resistance. Further, the heat resistance of the layer comprised of ZrO₂ tends to decrease significantly over time. In some cases, such an optical member in which the overall heat resistance of an antireflective film is inadequate as well as the heat resistance drops significantly over time has a practical problem, for example, as eyewear lenses. This is because plastic eyewear frames are heated when the eyewear lenses are inserted into frame and this heat is transmitted to the eyewear lens. In antireflective films with low heat resistance, differences in thermal expansion coefficients sometimes cause cracks (fine fissures).

To solve such problems of heat resistance, JP 2-291502 A, for example, discloses an optical member having an antireflective film employing vapor deposition films comprising Ta₂O₅, ZrO₂, and Y₂O₃ on a high refractive index layer, and a vapor deposition composition forming a vapor deposition film comprising Ta₂O₅, ZrO₂, and Y₂O₃.

Particularly in the field of eyewear, there is a demand for a new optical member having a plastic lens substrate with an antireflective film of extremely good heat resistance that decreases as little as possible.

Since a resin substrate has better elasticity than a glass substrate, there is a demand for providing an antireflective film of high film strength that will not crack when force is exerted on the substrate causing it to flex.

Accordingly, the present application describes an optical member comprising a substrate in the form of a material comprised of polyurethane urea polymer and having an antireflective layer that is suited to the substrate and has a good heat resistance and high film strength as well as that is undergone little reduction of heat resistance over time.

The present inventors conducted extensive research into the development of materials suited to optical applications that imparted good mold releasing properties without compromising the transparency of polyurethane urea materials such as those described in US 6,127,505 A. As a result, they discovered that an optical material obtained by casting and curing a composition comprised of a component comprising a specific isocyanate terminal prepolymer, a component comprising a specific aromatic diamine, and a component in the form of a mixture of phosphoric acid monoester and phosphoric acid diester respectively having a specific structure was suited to the above-stated object; the first aspect of the present invention was achieved.

Further, the present inventors conducted extensive research into the development of a material suited to optical applications that imparted good resistance to oxidation (resistance to yellowing) without compromising transparency in materials obtained by cast polymerization of an isocyanate terminal prepolymer having an intramolecular urethane bond and an aromatic diamine, such as is disclosed in US 6,127,505 A. As a result, they discovered that an optical material obtained by casting and curing a composition comprised of a component comprising specific isocyanate terminal prepolymer, a component comprising a specific aromatic diamine, and a component comprising a phosphorous peroxide decomposition agent was suited to the above-stated second object; the second aspect of the present invention was achieved.

Further, as a result of extensive research conducted by the present inventors to achieve the above-stated third object, they discovered that by providing on a polyurethane urea polymer substrate an antireflective film in the form of a multilayered antireflective film comprising a 1/2 λ layer, where the 1/2 λ layer comprised multiple high refractive index layers containing niobium oxide and layers of silicon dioxide positioned between the high refractive index layers, it was possible to obtain an optical member having a multilayer antireflective film having high heat resistance and film strength in which vapor deposition film could be formed rapidly; the third aspect of the present invention was achieved.

### Disclosure of the Invention

The first aspect of the present invention to achieve the above-mentioned first object is as follows;
(1) A transparent molded article comprised of a polymer of the following components (A) and (B), characterized in that said polymer further comprises the following components (C) and (D).
   Component (A): isocyanate terminal prepolymer in the form of a reaction product of an aliphatic diisocyanate having an intramolecular cyclic structure and a diol having an average molecular weight of 300-2,500.
   Component (B): one or more aromatic diamines denoted by general formula (I). In general formula (I), R₁, R₂ and R₃ are each dependently any of a methyl, ethyl or thiomethyl group.
   Component (C): one or more phosphoric acid monoesters denoted by general formula (II). In general formula (II), R₄ is an alkyl group with a carbon number of 1-10 and n₁ is 1 or 2.
   Component (D): one or more phosphoric acid diesters denoted by general formula (III). In general formula (III), R₅ and R₆ are each dependently an alkyl group with a carbon number of 1-10 and n₂ and n₃ are 1 or 2. 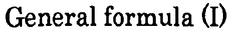 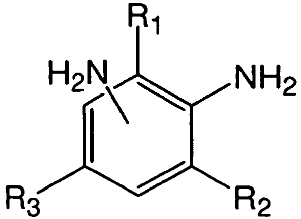 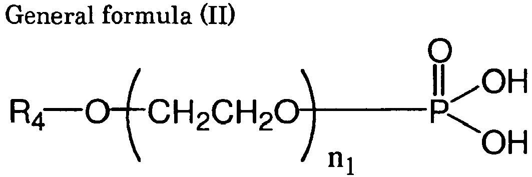 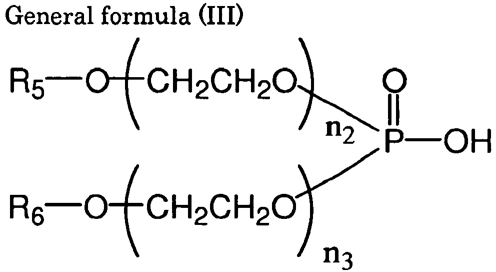
(2) The transparent molded article according to (1), wherein the total weight of components (C) and (D) ranges from 0.005 to 0.1 percent of the total weight of components (A), (B), (C) and (D).
(3) The transparent molded article according to (1) or (2), wherein the weight of component (C) ranges from 30 to 70 percent of the total weight of components (C) and (D).
(4) The transparent molded article according to any of (1)-(3), wherein the aliphatic diisocyanate having an intramolecular cyclic structure, that is a starting material of component (A), is an alicyclic diisocyanate.
(5) The transparent molded article according to (4), wherein the alicyclic diisocyanate is at least one selected from the group consisting of 4,4'-methylenebis(cyclohexyl isocyanate), isophorone diisocyanate, 1,3-bis(isocyanate methyl)cyclohexane and norbornene diisocyanate.
(6) The transparent molded article according to any of (1)-(5), wherein the diol having an average molecular weight of 300-2,500, that is a starting material of component (A), is a polyether diol or polyester diol.
(7) The transparent molded article according to any of (1)-(6), wherein the isocyanate group content of component (A) ranges from 10 to 20 weight percent.
(8) The transparent molded article according to any of (1)-(7), wherein, in general formula (I), R₁ is a methyl group, and R₂ and R₃ are dependently any of a ethyl group or thiomethyl group.
(9) The transparent molded article according to any of (1)-(8), wherein the molar ratio of the isocyanate group of component (A) to an amino group of component (B) ranges from 1.00 to 1.15.
(10) The transparent molded article according to any of (1)-(9), wherein R₄ is an alkyl group with a carbon number of 2-6 in general formula (II), and R₅ and R₆ are each dependently an alkyl group with a carbon number of 2-6 in general formula (III).
(11) The transparent molded article according to any of (1)-(10), wherein the transparent molded article is a lens.
(12) The transparent molded article according to (11), wherein the lens is an eyewear lens.
(13) The transparent molded article according to any of (1)-(12), wherein said transparent molded article has a cured coating film on the surface.
(14) The transparent molded article according to (13), wherein said cured coating film is one obtained from a coating composition comprising components (E) and (F).
   Component (E): an organic silicon compound denoted by general formula (IV) or a hydrolysis product thereof.

   (R₇)ₐ(R₉)_{b}Si(OR₈)₄-_{(a+b)} (IV)

   In general formula (IV), R₇ denotes an organic group comprising an epoxy group, methacryloxy group, mercapto group, amino group, or phenyl group; R₈ denotes an alkyl group with a carbon number of 1-4 or an acyl group with a carbon number of 1-4; R₉ denotes an alkyl group with a carbon number of 1-6; and a and b denote an integer 1 or 0.
   Component (F): metal oxide colloid particles.
(15) The transparent molded article according to any of (1)-(14), wherein said transparent molded article has an antireflective film on the surface or on said cured coating film.
(16) The transparent molded article according to (15), characterized in that said antireflective film is a multilayer antireflective film, and at least one layer of the multilayer antireflective film is a high refractive index layer comprising niobium oxide.
(17) A method of manufacturing a transparent molded article, comprising forming a molded article by pouring a mixture of components (A), (B), (C) and (D) according to any of (1)-(10) into a forming mold, and then polymerizing components (A) and (B).
(18) The method of manufacturing a transparent molded article according to (17), wherein said mixture is prepared by further mixing component (B) with a mixture of components (A), (C) and (D).

### Best Modes of Implementing the Invention

### [First Aspect]

The transparent molded article of the first aspect of the present invention is comprised of a polymer of components (A) and (B).

### Component (A)

Component (A) is an isocyanate terminal prepolymer in the form of a reaction product of an aliphatic diisocyanate having an intramolecular cyclic structure and a diol having an average molecular weight of 300-2,500. Making the diisocyanate, one starting material of the aforementioned isocyanate terminal prepolymer, an aliphatic diisocyanate having an intramolecular cyclic structure facilitates control of the reaction during manufacturing or polymerizing the prepolymer and imparts suitable elasticity to the molded article finally obtained. Further, it imparts high heat resistance and good mechanical characteristics to the molded article obtained.

The aliphatic diisocyanate having an intramolecular cyclic structure is an aliphatic diisocyanate having a cyclic structure in the main chain or in the side chain. The cyclic structure may be alicyclic, aromatic, or heterocyclic. However, the aliphatic diisocyanate having an intramolecular cyclic structure is desirably an alicyclic diisocyanate from the perspective of preventing yellowing and maintaining adequate elasticity and hardness. Molded articles obtained with isocyanate having an aromatic ring tend to yellow more than those obtained with alicyclic diisocyanate; molded articles obtained with aliphatic chain-structured isocyanate tend to be softer and lose their shape more readily.

Examples of alicyclic diisocyanates are: 4,4'-methylenebis(cyclohexyl isocyanate), isophorone diisocyanate, 1,2-bis(isocyanate methyl)cyclohexane, 1,3-bis(isocyanate methyl)cyclohexane, 1,4-bis(isocyanate methyl)cyclohexane, 1,2-diisocyanate cyclohexane, 1,3-diisocyanate cyclohexane, 1,4-diisocyanate cyclohexane, and norbornene diisocyanate. Examples of diisocyanates having aromatic rings are: m-xylylene diisocyanate, o-xylylene diisocyanate, p-xylylene diisocyanate, and m-tetramethylxylylene diisocyanate. It is particularly preferable that it is at least one selected from the group consisting of 4,4'-methylenebis(cyclohexyl isocyanate), isophorone diisocyanate, 1,3-bis(isocyanate methyl)cyclohexane, and norbornene diisocyanate.

The average molecular weight of the diol that is the other starting material of the isocyanate terminal prepolymer of component A is 300-2,500. When the average molecular weight of the diol is less than 300, toughness cannot be imparted to the molded article obtained, and when greater than 2,500, the molded article obtained becomes soft and does not retain its shape. The average molecular weight of the diol is desirably 400-1,000. Examples of diols having an average molecular weight of 300-2,500 are polyether diols and polyester diols. These diols are preferred because of good compatibility with the other component. In the case of a diol of poor compatibility, it becomes necessary to add another component in the form of a compatibility enhancer to maintain the transparency of the molded article obtained, potentially resulting in loss of transparency.

Examples of such diols are: polyoxyethylene glycol, polyoxypropylene glycol, polyoxytetramethylene glycol, polyester diol comprised of ethylene glycol and adipic acid, polyester diol comprised of propylene glycol and adipic acid, polyester diol comprised of diethylene glycol and adipic acid, polyester diol comprised of 1,4-butane diol and adipic acid, polyester diol comprised of neopentyl glycol and adipic acid, polyester diol comprised of 1,6-hexanediol and adipic acid, polyester diol comprised of 1,10-decanediol and adipic acid, polyester diol comprised of 1,4-butanediol and sebacic acid, polycaprolactone diol comprised of ethylene glycol and ε -caprolactone, polycaprolactone diol comprised of propylene glycol and ε -caprolactone, polycaprolactone diol comprised of diethylene glycol and ε -caprolactone, polycaprolactone diol comprised of 1,4-butane diol and ε -caprolactone, polycaprolactone diol comprised of neopentyl glycol and ε -caprolactone, polycaprolactone diol comprised of 1,6-hexane diol and ε -caprolactone, polycaprolactone diol comprised of 1,10-decane diol and ε -caprolactone, and polycarbonate glycol. Preferred examples are: polyoxypropylene glycol, polyoxytetramethylene glycol, polyester diol comprised of 1,4-butane diol and adipic acid, polyester diol comprised of neopentyl glycol and adipic acid, polyester diol comprised of 1,6-hexane diol and adipic acid, and polyester diol comprised of 1,10-decane diol and adipic acid.

The isocyanate group content of isocyanate terminal prepolymer component (A) desirably falls within a range of 10-20 weight percent. When the above-stated isocyanate group content falls below the above-stated range, the hardness of the molded article obtained tends to decrease, and when the above-stated range is exceeded, it tends to become difficult to obtain toughness (adequate strength) of a molded article obtained. The above-stated isocyanate group content further preferably falls within a range of 11-15 weight percent.

### Component (B)

Component (B) is one or more aromatic diamines denoted by general formula (I).

In general formula (I), R₁, R₂, and R₃ are each independently any of a methyl, ethyl, or thiomethyl group. Employing substituents R₁, R₂, and R₃ mentioned above can suppress crystallinity and enhance compatibility with the other components. When these substituents are absent or present in low numbers, crystallinity rises, resulting in handling difficulty. When employing the other substituents, compatibility with the other components deteriorates, resulting in apprehensively decreasing the transparency of the material obtained.

The following compounds are more specific examples of the above-stated aromatic diamines: 1,3,5-trimethyl-2,4-diaminobenzene, 1,3,5-trimethyl-2,6-diaminobenzene, 1,3,5-triethyl-2,4-diaminobenzene, 1,3,5-triethyl-2,6-diaminobenzene, 1,3,5-trithiomethyl-2,4-diaminobenzene, 1,3,5-trithiomethyl-2,6-diaminobenzene, 3,5-diethyl-2,4-diaminotoluene, 3,5-diethyl-2,6-diaminotoluene, 3,5-dithiomethyl-2,4-diaminotoluene, 3,5-dithiomethyl-2,6-diaminotoluene, 1-ethyl-3,5-dimethyl-2,4-diaminobenzene, 1-ethyl-3,5-dimethyl-2,6-diaminobenzene, 1-ethyl-3,5-dithiomethyl-2,4-diaminobenzene, 1-ethyl-3,5-dithiomethyl-2,6-diaminobenzene, 3-ethyl-5-thiomethyl-2,4-diaminotoluene, 3-ethyl-5-thiomethyl-2,6-diaminotoluene, and 3-thiomethyl-5-ethyl-2,4-diaminotoluene.

In the above-listed aromatic diamines, R₁ is desirably a methyl group and R₂ and R₃ each desirably represent either an ethyl group or thiomethyl group, in which case the molded article obtained tends not to fog and can be imparted with adequate toughness.

More specific examples of the above-stated aromatic diamines are: 3,5-diethyl-2,4-diaminotoluene, 3,5-diethyl-2,6-diaminotoluene, 3,5-dithiomethyl-2,4-diaminotoluene, and 3,5-dithiomethyl-2,6-diaminotoluene.

As for the ratio of components (A) and (B), the molar ratio of the isocyanate group of component (A) with respect to the amino group of component (B) desirably falls within a range of 1.00-1.15 from the perspective of achieving adequate toughness (strength). The-above-stated molar ratio further preferably falls within a range of 1.02-1.12.

The molded article of the first aspect of the present invention is the above-described polymer, into which components (C) and (D) described below are further incorporated.

### Component (C)

Component (C) is one or more phosphoric acid monoesters denoted by general formula (II). In general formula (II), R₄ denotes an alkyl group with a carbon number of 1-10 and n₁ is 1 or 2. Phosphoric acid monoesters within this range yield a molded product that does not fog and has good transparency. From the perspective of achieving optimal compatibility with other components, preferred is a phosphoric acid monoester in which R₄ in general formula (II) is an alkyl group with a carbon number of 2-6. Further, n₁ is desirably 1.

Examples of phosphoric acid monoesters denoted by general formula (II) are: methoxyethyl acid phosphate, ethoxyethyl acid phosphate, propoxyethyl acid phosphate, butoxyethyl acid phosphate, pentyloxyethyl acid phosphate, hexyloxyethyl acid phosphate, heptyloxyethyl acid phosphate, octyloxyethyl acid phosphate, nonyloxyethyl acid phosphate, and decyloxyethyl acid phosphate. Particularly preferred phosphoric acid monoesters are, for example, ethoxyethyl acid phosphate, propoxyethyl acid phosphate, butoxyethyl acid phosphate, pentyloxyethyl acid phosphate, and hexyloxyethyl acid phosphate.

### Component (D)

Component (D) is one or more phosphoric acid diesters denoted by general formula (III). In general formula (III), since R₅ and R₆ are each independently an alkyl group with a carbon number of 1-10, and n₂ and n₃ are 1 or 2, fogging of the molded article obtained can be prevented and a molded article with good transparency can be obtained. From the perspective of achieving optimal compatibility with other components, it is desirable that R₅ and R₆ in general formula (III) are each independently an alkyl group with a carbon number of 2-6.

Examples of the phosphoric acid diesters denoted by general formula (III) are: methoxyethyl-ethoxyethyl acid phosphate, methoxyethyl-propoxyethyl acid phosphate, ethoxyethyl-propoxyethyl acid phosphate, ethoxyethyl-butoxyethyl acid phosphate, propoxyethyl-butoxyethyl acid phosphate, di(methoxyethyl) acid phosphate, di(ethoxyethyl) acid phosphate, di(propoxyethyl) acid phosphate, di(butoxyethyl) acid phosphate, di(pentyloxyethyl) acid phosphate, di(hexyloxyethyl) acid phosphate, di(heptyloxyethyl) acid phosphate, di(octyloxyethyl) acid phosphate, di(nonyloxyethyl) acid phosphate, and di(decyloxyethyl) acid phosphate. Preferred examples of phosphoric acid diesters are di(ethoxyethyl) acid phosphate, di(propoxyethyl) acid phosphate, di(butoxyethyl) acid phosphate, di(pentyloxyethyl) acid phosphate, and di(hexyloxyethyl) acid phosphate.

The total weight of components (C) and (D) desirably falls with a range of 0.005-0.1 percent of the total weight of components (A), (B), (C), and (D). When the total weight of components (C) and (D) falls below the above-stated range, it is difficult to achieve good mold releasing properties, and when the above-stated range is exceeded, molding defects sometimes occur due to peeling during polymerization and transparency is sometimes lost. More preferably, the total weight of components (C) and (D) falls within a range of 0.01-0.1 percent of the total weight of components (A), (B), (C), and (D).

The weight of component (C) desirably falls within a range of 30-70 percent of the total weight of components (C) and (D). When the weight of component (C) exceeds this range, there is a risk of foaming during polymerization, and when below this range, transparency sometimes decreases due to fogging. The weight of component (C) more preferably falls within a range of 35-65 percent of the total weight of components (C) and (D).

### Manufacturing Method

The transparent molded article of the first aspect of the present invention can be manufactured, for example, by a method comprising forming a molded article by pouring a mixture of components (A), (B), (C), and (D) mentioned above into a forming mold, and then polymerizing components (A) and (B).

However, since the polymerizing property (reactivity) of components (A) and (B) is high and the reaction progresses even at ordinary temperature, it is preferred that the mixture (mixture of components (A), (B), (C), and (D)) is prepared by first adding components (C) and (D) to component (A), mixing, and further mixing component (B) with the uniformly melted product (mixture), and after preparation, it is rapidly poured into the forming mold.

For the polymerization reaction condition and the like, suitable reference can be made to the conditions and the like recorded at column 5 of US 6,127,505 A; these will also be explained in detail in embodiments described further below herein.

In the molded article of the first aspect of the present invention, in addition to components (C) and (D), as needed, additives such as anti-oxidants, ultraviolet stabilizers, and color blockers may be added to the extent that the transparency and strength of the molded article of the first aspect of the present invention are not lost. Suitable examples of additives are described at columns 6-7 of US 6,127,505 A.

The transparent molded article of the first aspect of the present invention may be employed in optical applications such as lenses such as eyewear lenses and optical lenses; prisms, optical fiber; recording medium substrates employed in optical disks, magnetic disks and the like; and filters. The transparent molded article of the present invention is employed in lenses, with particular preference in eyewear lenses.

A cured coating film can be present on the surface of the transparent molded article of the first aspect of the present invention. Examples of cured coating films are coating films obtained by curing a coating composition comprising components (E) and (F).

Component (E): an organic silicon compound denoted by general formula (IV) or a hydrolysis product thereof.

(R₇)ₐ(R₉)_{b}Si(OR₈)_{4-(a+b)} (IV)

(In general formula (IV), R₇ denotes an organic group comprising an epoxy group, methacryloxy group, mercapto group, amino group, or phenyl group; R₈ denotes an alkyl group with a carbon number of 1-4 or an acyl group with a carbon number of 1-4; R₉ denotes an alkyl group with a carbon number of 1-6; and a and b denote an integer 1 or 0.)

### Component (F): metal oxide colloid particles

Specific examples of the organic silicon compound denoted by general (IV) are given below:
methyl silicate, ethyl silicate, n-propyl silicate, i-propyl silicate, n-butyl silicate, sec-butyl silicate, t-butyl silicate, tetraacetoxysilane, methyltrimethoxysilane, methyltriethoxysilane, methyltripropoxysilane, methyltriacetoxysilane, methyltributoxysilane, methyltriamyloxysilane, methyltriphenoxysilane, methyltribenzyloxysilane, methyltriphenethyloxysilane, glycidoxymethyltrimethoxysilane, glycidoxymethyltriethoxysilane, α -glycidoxyethyltriethoxysilane, β-glycidoxyethyltrimethoxysilane, β -glycidoxyethyltriethoxysilane, α-glycidoxypropyltrimethoxysilane, α -glycidoxypropyltriethoxysilane, β-glycidoxypropyltrimethoxysilane, β -glycidoxypropyltriethoxysilane, γ-glycidoxypropyltrimethoxysilane, γ -glycidoxypropyltriethoxysilane, γ-glycidoxypropyltripropoxysilane, γ -glycidoxypropyltributoxysilane, γ-glycidoxypropyltriphenoxysilane, α -glycidoxybutyltrimethoxysilane, γ-glycidoxybutyltriethoxysilane, β -glycidoxybutyltrimethoxysilane, *β-*glycidoxybutyltriethoxysilane, γ -glycidoxybutyltrimethoxysilane, γ-glycidoxybutyltriethoxysilane, δ -glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β -(3,4-epoxycyclohexyl)ethyltrimethoxysilane, β -(3,4-epoxycyclohexyl)ethyltriethoxysilane, β -(3,4-epoxycyclohexyl)ethyltripropoxysilane, β -(3,4-epoxycyclohexyl)ethyltributoxysilane, β -(3,4-epoxycyclohexyl)ethyltriphenoxysilane, γ -(3,4-epoxycyclohexyl)propyltrimethoxysilane, γ -(3,4-epoxycyclohexyl)propyltriethoxysilane, δ -(3,4-epoxycyclohexyl)butyltrimethoxysilane, δ -(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ -glycidoxypropylethyldiethoxysilane, γ -glycidoxypropylvinyldimethoxysilane, γ-glycidoxypropylvinyldiethoxysilane, γ-glycidoxypropylphenyldimethoxysilane, γ-glycidoxypropylphenyldiethoxysilane, ethyltrimethoxysilane, ethyltriethoxysilane, vinyltrimethoxysilane, vinyltriacetoxysilane, vinyltriethoxysilane, phenyltrimethoxysilane, phenyltriethoxysilane, phenyltriacetoxysilane, γ -chloropropyltrimethoxysilane, γ-chloropropyltriethoxysilane, γ -chloropropyltriacetoxysilane, 3,3,3-trifluoropropyltrimethoxysilane, γ -methacryloxypropyltrimethoxysilane, γ-mercaptopropyltrimethoxysilane, γ -mercaptopropyltriethoxysilane, β-cyanoethyl-triethoxysilane, chloromethyltrimethoxysilane, chloromethyltriethoxysilane, N-(β -aminoethyl) γ-aminopropyltrimethoxysilane, N-(β -aminoethyl) γ-aminopropylmethyldimethoxysilane, γ -aminopropylmethyldimethoxysilane, N-( β -aminoethyl)- γ -aminopropyltriethoxysilane, N-(β -aminoethyl)- γ-aminopropylmethyldiethoxysilane, dimethyldimethoxysilane, phenylmethyldimethoxysilane, dimethoxydiethoxysilane, phenylmethyldiethoxysilane, γ -chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, methylvinyldimethoxysilane, and methylvinyldiethoxysilane.

Examples of the metal oxide colloid particles of component (F) are tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO), and antimony oxide (Sb₂O₅); these may be employed singly or in combinations of two or more.

As for the quantity employed in the above-described coating composition, desired are 1-500 weight parts of the metal oxide colloid particles of component (F) per 100 weight parts of the organic silicon compound of component (E). At less than one weight part of the metal oxide colloid particles of component (F), no improvement in scratch resistance is achieved in the cured coating film. Conversely, at more than 500 weight parts, cracks tend to form between the cured coating film and the substrate and transparency tends to decrease.

Into the above-described coating composition, (1) curing agents to promote the reaction and (2) various surfactants to enhance wetting properties during coating and to increase the smoothness of the cured coating film can be suitably incorporated. Ultraviolet-absorbing agents, anti-oxidants and the like may also be added to the extent that they do not affect the physical properties of the cured coating film.

Examples of the above-mentioned curing agent are: amines such as allyl amine and ethyl amine; salts and metal salts comprising various acids and bases including Lewis acids and Lewis bases, such as organic carboxylic acids, chromic acid, hypochlorous acid, boric acid, perchloric acid, bromic acid, selenious acid, thiosulfuric acid, orthosilicic acid, thiocyanic acid, nitrous acid, aluminic acid, and carbonic acid; and metal alkoxides comprising aluminum, zirconium, and titanium, and metal chelate compounds thereof.

The above-described coating composition is applied to the surface of the transparent molded article of the first aspect of the present invention and cured to form a cured coating film. The coating composition is cured by hot air drying or activation energy irradiation. As for the curing conditions, Curing is desirably conducted in hot air at a temperature of 70-200°C, preferably 90-150°C. An example of activation energy radiation is far infrared radiation, which makes it possible to adjust a damage caused by heat at a low level.

As a method of forming a cured coating film comprised of the above-described coating composition on the substrate, applied are usual methods such as dipping, spinning, and spraying. From the perspective of surface precision, dipping and spinning are particularly preferred. Prior to applying the coating composition to the substrate, adhesion between the substrate and the cured coating film can be enhanced by chemical processing with an acid, alkali, or various organic solvents; physical treatments by plasma, ultraviolet radiation, ozone, and the like; cleaning employing various cleaning agents; and primer treatment employing various resins.

On the transparent molded article of the first aspect of the present invention, an antireflective film may be present either directly on the molded article or on the above-described cured coating film.

The type of antireflective film employed is not specifically limited; conventionally known inorganic oxides, MgF₂, and the like may be employed in single layers or multiple layers. Examples of antireflective films suitable for use are disclosed in JP 2-262104 A and JP 56-116003 A. The cured coating film of the present invention may also be employed as a multifunctional film by the addition of functional components such as antifogging, photochromic, and antigrime agents.

The above-mentioned antireflective film is a multilayer antireflective film, with at least one layer of the multilayer antireflective film being a high refractive index layer comprising niobium oxide. The high refractive index layer may also comprise zirconium oxide and/or yttrium oxide.

An optical member can comprise an antireflective film directly or indirectly on a polyurethane urea polymer substrate, particularly, the above-mentioned antireflective layer is a multilayer antireflective film comprising a 1/2 λ layer.

The above-mentioned 1/2 λ layer is characterized by comprising plural high refractive index layers comprising at least niobium oxide and layers comprised of silicon dioxide positioned between the high refractive index layers.

In general, the antireflective layer is configured of, from the substrate side, a 1/4 λ layer (corresponding to a medium refractive index layer), a 1/2 λ layer (corresponding to a high refractive index layer), and a 1/4 λ layer (corresponding to a low refractive index layer); a 1/4 λ layer (corresponding to a medium refractive index layer), a 1/4 λ layer (corresponding to a medium refractive index layer), a 1/2 λ layer (corresponding to a high refractive index layer), and a 1/4 λ layer (corresponding to a low refractive index layer); or a 1/4 λ layer (corresponding to a medium refractive index layer), a 1/4 λ layer (corresponding to a high refractive index layer), and a 1/4 λ layer (corresponding to a low refractive index layer). However, since the antireflective wavelength region of the third configuration is narrow when the refractive index of the substrate or hard coat layer is about 1.8 or less, the first and second configurations are preferred in the optical member of the third aspect of the present invention.

In the film configuration of the antireflective film present on the optical member, the above-mentioned 1/2 λ layer corresponding to a high refractive index layer comprises plural high refractive index layers containing at least niobium oxide, and SiO₂ layers of a substance having a low refractive index positioned between them.

More specifically, the above-mentioned 1/2 λ layer may have the following configuration. Since the strength-increasing effect decreases when the thickness of the SiO₂ layers is less than 0.02 λ, the number of layers can be increased to the extent that this does not occur. Here, the high refractive index layer refers to high refractive index layers comprising at least niobium oxide.
(1) High refractive index layer - SiO₂ layer - high refractive index layer
(2) High refractive index layer - SiO₂ layer - high refractive index layer - SiO₂ layer - high refractive index layer
(3) High refractive index layer - SiO₂ layer - high refractive index layer - SiO₂ layer - high refractive index layer - SiO₂ layer - high refractive index layer

Since the high refractive index layer in the form of a metal oxide layer has poorer structural strength and heat resistance than the SiO₂ layer, in the 1/2 λ layer with the thickest high refractive index layer, strength and heat resistance tend to be relatively low.

Dividing the high refractive index layer in the form of a metal oxide layer into plural layers as is done in the third aspect of the present invention reduces the thickness of the single layers, and sandwiching strong, highly heat resistant SiO₂ layers between each of the layers increases the strength of the 1/2 λ layer.

The above-mentioned high refractive index layer sometimes comprises only niobium oxide, and sometimes further comprises zirconium oxide and/or yttrium oxide in addition to niobium oxide. The plural high refractive index layers of all of the aspects may be of identical composition or may each have a different composition. The film thickness of plural high refractive index layers of the various aspects may be identical or different, but smaller differences in film thickness are desirable. This is because it is possible to make the film thickness of the high refractive index layers thinnest and to achieve high refractive index substance layers without optical irregularities.

The thickness of the SiO₂ layer is desirably 0.02 λ -0.15 λ. When the thickness of the SiO₂ layer is 0.02 λ or more, the effect in raising the strength of the 1/2 λ layer can be adequately achieved, and when 0.15 λ or less, a high refractive index can be maintained.

The above-mentioned high refractive index layer constituting the 1/2 λ layer comprises niobium oxide (Nb₂O₅). The above-mentioned high refractive index layer constituting the 1/2 λ layer may comprise zirconium oxide (ZrO₂) and/or yttrium oxide (Y₂O₃) in addition to niobium oxide (Nb₂O₅).

The above-mentioned high refractive index layer desirably comprises 90-100 weight percent niobium oxide, 0-5 weight percent zirconium oxide, and 0-5 weight percent yttrium oxide based on the total weight of the layer. When the above-mentioned high refractive index layer constituting the 1/2 λ layer consists of only niobium oxide (Nb₂O₅), as well as when zirconium oxide (ZrO₂) and/or yttrium oxide (Y₂O₃) is comprised in the niobium oxide (Nb₂O₅), a highly transparent layer in which absorption tends not to occur results. However, when the quantity of niobium oxide (Nb₂O₅) is less than 90 weight percent, it becomes difficult to achieve a high refractive index. When the content of zirconium oxide (ZrO₂) exceeds five weight percent, heat resistance tends to decrease. And when the content of yttrium oxide (Y₂O₃) exceeds 5 weight percent, heat resistance tends to decrease.

To the extent that the above-described effects are not compromised, metal oxides such as aluminum oxide (Al₂O₃), tantalum oxide (Ta₂O₃), and titanium oxide (TiO₂) may be added to the evaporation composition of the third aspect of the present invention.

The 1/4 λ layer (corresponding to a medium refractive index layer) of the multilayer antireflective film is not specifically limited. Examples are the above-described high refractive index layer and an SiO₂ layer; a high refractive index layer comprising aluminum oxide (Al₂O₃) in addition to the above-described niobium oxide and the like and an SiO₂ layer; and a known high refractive index oxide layer (for example, ZrO₂, TaO₅, TiO₂, and Nb₂O₅) and an SiO₂ layer. Further, the 1/4 λ layer (corresponding to the low refractive index layer) is not specifically limited. Examples are an SiO₂ layer and an MgF₂ layer. However, from the perspective of strength, an SiO₂ layer is preferred. The undercoating layer is not specifically limited. Examples are an SiO₂ layer; a layer comprised of a mixture of SiO₂ and Al₂O₃; a metal layer (Nb, Ta, Cr, and the like); an SiO₂ layer, a metal layer, and an SiO₂ layer; or an SiO₂ layer, a metal oxide layer, and an SiO₂ layer.

To form the above-described antireflective layer, powders of niobium oxide, zirconium oxide, and yttrium oxide (including further oxides (aluminum oxide, tantalum oxide, titanium oxide and the like) as needed) are sintered, a vapor of the mixed oxides is generated from the sintered product obtained, and the vapor product generated is deposited onto the substrate.

The above-mentioned high refractive index layer is desirably formed by mixing niobium oxide (Nb₂O₅) powder, zirconium oxide (ZrO₂) powder, and yttrium oxide (Y₂O₃) powder (hereinafter, these powders are sometimes simply referred to as the "mixed powder"), pressing the mixed powder, and heating it with an electron beam, for example, to deposit the vapor product on the substrate. Following pressing, it is further desirable for the sintered product to be employed in pellet form by sintering to shorten the evaporation time. The quantity of the various oxides in the mixed powder and sintered product may be suitably varied based on the composition of the high refractive index layer being formed.

The evaporation composition obtained by sintering the mixed powder of Nb₂O₅ powder, ZrO₂ powder, and Y₂O₃ powder forms an evaporated film more rapidly and has better production properties than the conventional evaporation composition obtained by sintering ZrO₂.

The three-component vapor deposition composition mentioned above will be briefly described.

Splashing occurs in an evaporation starting material consisting solely of niobium oxide in the course of heating pellets with an electron gun. Splashing has the effect of adhering microparticles to the lens surface, resulting in defective product. Further, coloration (absorption) of thin films tends to occur, and resistance to chemicals such as acids and alkalis tends to decrease. To achieve improvement in these regards, ZrO₂ and Y₂O₃ are employed in combination.

The addition of ZrO₂ has the effect of reducing the splashing that causes defects of film stripping and adhesion of impurities during the heating of pellets of niobium oxide alone with an electron gun. Thus, it is suitable for forming a evaporated film of stable quality.

The addition of Y₂O₃ has the effect of changing the state of oxidation of thin films that are evaporated by heating with an electron gun and inhibiting coloration (absorption) occurring in thin films that formed by evaporation of niobium oxide alone or mixed pellets of niobium oxide and zirconium oxide.

In the present invention, the use of a evaporation composition in which the three components set forth above are mixed gives an unanticipated effect that the degree of the loss of heat resistance over time is markedly reduced in the antireflective film obtained, while an individual effect is maintained.

The antireflective layer may be formed by, as set forth above, sintering powders of niobium oxide, zirconium oxide, and yttrium oxide together with other oxides (such as aluminum oxide, tantalum oxide, and titanium oxide) as needed, generating a mixed oxide vapor from the sintered product obtained, and depositing the vapor product on a substrate. The use of ion assist in combination is desirable in this method of forming antireflective films.

The advantage of employing ion assist in combination is that, by a method employing assist- processing by oxygen ions during evaporation of the above-described high refractive index layer, lens absorption can be further inhibited. Further, alkali resistance can be improved by using ion assist with a mixed gas of oxygen and argon. The composition of the mixed gas is desirably 90-95 percent of oxygen gas and 10-5 percent of argon gas. When the ratio of oxygen gas is low, optical properties cannot be retained. The use of a suitable amount of argon gas can increase film density.

The pressure of press forming to obtain the above-mentioned evaporation composition is applied by a conventional method. For example, a pressure of 200-400 kg/cm² (19.6-39.2 MPa) is desirable. Although the sintering temperature varies with the composition ratio of each component or the like, for example, a temperature of 1,000-1,400°C is suitable. The sintering time can be suitably varied with the sintering temperature or the like, and normally ranges from 1-48 hours.

A high refractive index film can be formed under normal conditions using a method such as vacuum evaporation, sputtering, or ion plating using the above-described evaporation composition as the evaporation source. That is, a vapor of the mixed oxides is generated from the evaporation composition and the vapor product generated is deposited on the substrate. The temperature to which the synthetic resin substrate is heated differs with the heat resistance temperature of the synthetic resin, but, for example, a temperature of 70-85 °C is suitable.

Even when a film must be formed at a low substrate heating temperature of 70-85°C during evaporation as on a synthetic resin substrate by the above-described method, an antireflective film with good heat resistance that tends not to be lost over time can be obtained.

The substrate employed in the optical member of the third aspect of the present invention is comprised of polyurea having an intramolecular urethane bond (referred to in the specification of the present application as polyurethane urea polymer). In particular, the polyurethane urea polymer disclosed in US 6,127,505 A can be cast polymerized and is a polyurea having intramolecular urethane bonds, and is a material having strength comparable to that of polycarbonate.

Further, the polyurethane urea polymer substrate is desirably a molded article comprised of a polymer of components (A) and (B) employed in the first aspect, further comprising components (C) and (D) employed in the first aspect.

### The Manufacturing Method

The substrate comprised of the above-mentioned molded article can be manufactured, for example, by a method comprising forming a molded article by pouring components (A), (B), (C), and (D) mentioned above into a forming mold, and then polymerizing components (A) and (B).

However, since the polymerizing property (reactivity) of components (A) and (B) is high and the reaction progresses even at ordinary temperature, it is preferred that the mixture (mixture of components (A), (B), (C), and (D)) is prepared by first adding components (C) and (D) to component (A), mixing, and further mixing component (B) with the uniformly melted product (mixture), and after preparation, it is rapidly poured into the forming mold.

For the polymerization reaction condition and the like, suitable reference can be made to the descriptions in US 6,127,505 A; these will also be explained in detail in embodiments described further below herein. Additives such as anti-oxidants, ultraviolet stabilizers, coloring preventing agents and the like may be added as needed in addition to components (C) and (D) to the extent that the transparency and strength of the molded article of the third aspect of the present invention are not lost. Examples of the additives are those described in US 6,127,505 A.

In the course of providing an antireflective film on a substrate, it is desirable that a hard coat layer comprising the organic silicon polymer is formed on the substrate surface by a coating method such as dipping or spin-coating, and an antireflective film is provided on the hard coat layer. To improve adhesion between the substrate and antireflective film, scratch resistance and the like, an undercoating layer is desirably inserted between the substrate and the antireflective film or between the hard coat layer formed on the substrate surface and the antireflective film. For example, an evaporated film of silicon oxide or the like can be employed as such an undercoating layer.

An example of the above-mentioned hard coat layer is a coating film obtained by curing a coating composition comprising components (E) and (F) employed in the first and second aspects. The quantity of coating composition employed, additives that can be added to the coating composition, application and curing of the coating composition, and method of forming the hard coat layer comprised of the coating composition on the substrate are identical to those employed when forming the cured coating film in the first and second aspects.

The antireflective film can be present directly on the substrate or on the above-mentioned hard coat layer.

The optical member having an antireflective layer may be employed in optical applications such as lenses such as eyewear lenses and camera lenses; prisms, optical fiber; recording medium substrates employed in optical disks, magnetic disks and the like; and filters. It may also be employed in automobile window glass and the optical filters mounted on the displays of word processors. The optical member can be employed in lenses , with particular preference, in eyewear lenses.

### Embodiments

The present invention is specifically described by embodiments below. However, the present invention is not limited to the embodiments.

### [First Aspect]

The various physical properties of plastic lenses obtained in embodiments and comparative examples of the first aspect were evaluated by the evaluation methods indicated below.

### (1) Mold releasing property

Denoted as UA were those in which stripping during polymerization, which caused molding failures such as a deformation of a lens surface and the like, did not occur, as well as releasing from a forming mold could be done without damages of a lens and a glass mold during peeling a glass obtained from a glass mold even if not applying a force. Denoted as A were those in which releasing from a forming mold required a little force, but could be easily done. These had good mold releasing properties and were acceptable on manufacturing. Conversely, denoted as B were those in which damages of a lens and a glass mold did not occur, but molding failures such as a deformation of a lens surface occurred. Denoted as C were those in which a lens and a glass mold were damaged. These had poor mold releasing properties and were unacceptable on manufacturing.

### (2) Transparency

The lens obtained was visually inspected under fluorescent lighting in a dark location. Lenses without fogging or precipitation of opaque substances were denoted as A. Those exhibiting slight fogging and the like were denoted as B. And those with severe fogging or clearly visible precipitation of opaque substances were denoted as C. Clearly, C were unsuitable as lenses.

### (3) Impact resistance

Steel balls weighing 16 g were allowed to drop naturally from a height of 1.27 m, as FDA standard, on the center of an S-4.00 lens with a center thickness of 1.3 mm. Those in which all test samples were unscathed were denoted as A, those in which fewer than 30 percent (but at least one piece) of the test samples were destroyed, for example, cracked or broke through were denoted as B, and those in which 30 percent or more samples were broken were denoted as C. A test was also conducted where the weight of the steel ball was increased to 1 kg and the same evaluations were made.

### Embodiment 1

To 100 weight parts of isocyanate terminal prepolymer (denoted as ITP-1 in Table 1) having an isocyanate group content of 13 percent and comprised of polytetramethylene glycol with an average molecular weight of 400 and 4,4'-methylenebis(cyclohexyl isocyanate), 0.024 weight part of monobutoxyethyl acid phosphate (denoted as MBP in Table 1) and 0.036 weight part of di(butoxyethyl) acid phosphate (denoted as DBP in Table 1) were added in advance. The mixture was uniformly mixed and defoamed. Next, 25.5 weight parts of a mixture (denoted as DETDA in Table 1) of 3,5-diethyl-2,4-toluene diamine and 3,5-diethyl-2,6-toluene diamine were uniformly admixed at 60-70°C and stirred in a short time at high speed. Immediately after stirring, the mixture was poured into a lens-forming glass mold and polymerized with heating for 15 hours at 120°C to obtain a plastic lens (transparent molded article). The various physical properties of the plastic lens obtained are given in Table 1. Table 1 reveals that the obtained plastic lens exhibited no damage of lens and glass mold, and had an excellent mold releasing property from the glass mold. Further, the lens was excellent in transparency without fogging caused by cloud or scattering due to microcrystallization. The lenses also had good impact resistance, remaining undamaged in ball drop tests employing not only 16 g balls, as FDA standard, but also 1 kg balls.

### Embodiments 2-7

With the exception that the components shown in Table 1 were employed, plastic lenses (transparent molded articles) were obtained by the same operation as in Embodiment 1. The various physical properties of these plastic lenses are shown in Table 1. Table 1 shows that the plastic lenses obtained exhibited no damage of lens and glass mold, had an excellent mold releasing property from the glass mold. Further, the lens was excellent in transparency without fogging caused by cloud or scattering due to microcrystallization. The lenses also had good impact resistance, remaining undamaged in ball drop tests employing not only 16 g balls, as FDA standard, but also 1 kg balls.

### Comparative Example 1

With the exception that MBP and DBP were not employed, the same operation was conducted as in Embodiment 1. However, mold releasing property from the glass mold was poor, the glass mold broke, and a portion thereof remained adhered to the plastic lenses. When an attempt was made to peel it off, the lens surface was scratched, with the result that no plastic lens was obtained.

### Comparative Example 2

With the exception that no MBP or DBP was employed and a fluorine mold releasing agent MS-443 (made by Daikin Industries (Ltd.)) was coated on the glass mold as an external mold releasing agent, the same process was conducted as in Embodiment 1 and plastic lense were obtained. The various physical properties of the plastic lens obtained are shown in Table 1. Table 1 reveals that although the plastic lenses of Comparative Example 2 had good impact resistance, they had poor mold releasing properties due to molding failures caused by mold separation during polymerization. Further, fogging was observed near the surface, resulting in poor transparency.

### Comparative Examples 3-7

With the exception that the components shown in Table 1 were employed, plastic lenses were obtained by the same process as in Embodiment 1. The various physical properties of these plastic lenses are given in Table 1. Table 1 reveals that the plastic lenses of Comparative Example 3 had poor mold releasing properties, poor transparency, and poor impact resistance. Although the plastic lenses of Comparative Example 4 had good mold releasing properties, they exhibited little precipitation of opaque substances and had poor transparency and poor impact resistance. The plastic lens of Comparative Example 5, despite having good mold release properties and impact resistance, clearly exhibited fogging and had poor transparency. The plastic lens of Comparative Example 6, despite having good mold release properties, partly exhibited clouding and had poor transparency. Further, the lenses had poor impact resistance, with about 10 percent of the test samples exhibiting cracks in the 1 kg ball drop test. The plastic lenses of Comparative Example 7 had good mold releasing properties and impact resistance, but exhibited precipitation of opaque substances and had poor transparency.

**Table 1**

| | Component A (weight parts) | Component B (weight Parts) | Component C (weight parts) | Component D (weight parts) | Others (weight parts) | Isocyanate group /amino group 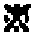 ¹ (molar ratio) | Ratio of (components C and D) to the total weight(weight percent) | Mold releasing property | Transparency | Impact resistance | |
|---|---|---|---|---|---|---|---|---|---|---|---|
| | | | | | | | | | | 16g | 1kg |
| Embodiment 1 | ITF-1 (100) | DETDA (25.5) | MBP (0.024) | DBP (0.036) | | 1.08 | 0.048 | UA | A | A | A |
| Embodiment 2 | ITP-1 (100) | DTTDA (32) | MBP (0.04) | DBP (0.04) | | 1.04 | 0.061 | UA | A | A | A |
| Embodiment 3 | ITP-1 (100) | DETDA (25.5) | MBP (0.003) | DBP (0.004) | | 1.08 | 0.0056 | UA | A | A | A |
| Embodiment 4 | ITP-1 (100) | DETDA (25.5) | MBP (0.06) | DBP (0.06) | | 1.08 | 0.096 | UA | A | A | A |
| Embodiment 5 | ITP-1 (100) | DETDA (24.5) | MPP (0.036) | DPP (0.024) | | 1.12 | 0.048 | UA | A | A | A |
| Embodiment 6 | ITP-1 (100) | DETDA (25.5) | MOP (0.065) | DOP (0.035) | | 11.08 | 0.080 | A | A | A | A |
| Embodiment 7 | ITP-2 (100) | DETDA (22) | MBP (0.024) | DBP (0.036) | | 1.06 | 0.049 | UA | A | A | A |
| Comp.Ex.1 | ITP-1 (100) | DETDA (25.5) | - | - | | 1.08 | - | C | - | - | - |
| Com.Ex.2 | ITP-1 (100) | DETDA (25.5) | - | - | MS-443 (-) | 1.08 | - | C | C | A | A |
| Comp.Ex.3 | ITP-1 (100) | DETDA (25.5) | - | - | IDP (0.2) | 1.08 | - | C | C | A | C |
| Comp.Ex.4 | ITP-1 (100) | DETDA (25.5) | MBP (0.06) | - | | 1.08 | 0.048 | A | B | A | C |
| Comp.Ex.5 | ITP-1 (100) | DETDA (25.5) | - | DBP (0.06) | | 1.08 | 0.048 | UA | C | A | A |
| Comp.Ex.6 | ITP-1 (100) | DETDA (25.5) | MHDP (0.024) | DHDP (0.036) | | 1.08 | 0.048 | A | C | A | B |
| Comp.Ex.7 | ITP-1 (100) | MOCA (30) | MBP (0.024) | DBP (0.036) | | 1.39 | 0.046 | A | C | A | A |

| | | | | | | | | | | | |
|---|---|---|---|---|---|---|---|---|---|---|---|
| Notes in the table 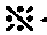 1: Molar ratio of isocyanate groups in component A relative to amino groups in component B. 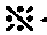 2: Total weight ratio of components C and D in all components. | | | | | | | | | | | |

### Descriptions of component names in table

ITP-1: Isocyanate terminal prepolymer comprised of polyoxytetramethylene glycol with an average molecular weight of 400 and 4,4'-methylenebis(cyclohexyl isocyanate), comprising 13 percent isocyanate groups
ITP-2: Isocyanate terminal prepolymer comprised of polyoxypropylene glycol with an average molecular weight of 500 and 4,4'-methylenebis(cyclohexyl isocyanate), comprising 11 percent isocyanate groups.
DETDA: Mixture of 3,5-diethyl-2,4-toluenediamine and 3,5-diethyl-2,6-toluene diamine
DTTDA: Mixture of 3,5-dimethylthio-2,4-toluenediamine and 3,5-dimethylthio-2,6-toluene diamine
MOCA: 4,4'-methylenebis(2-chloroaniline)
MBP: Monobutoxyethyl acid phosphate
DBP: Di(butoxyethyl) acid phosphate
MPP: Monopropoxyethyl acid phosphate
DPP: Di(propoxyethyl) acid phosphate
MOP: Monooctyloxyethyl acid phosphate
DOP: Di(octyloxyethyl) acid phosphate
MS-443: Fluorine-based mold releasing agent (made by Daikin Industries (Ltd.))
IDP: Isodecyl acid phosphate
MHDP: Monohexadecyloxyethyl acid phosphate
DHDP: Di(hexadecyloxyethyl) acid phosphate

### (Embodiment of molded article having cured coating film)

The various physical properties of the plastic lenses (transparent molded articles) having cured coating films obtained in the present embodiment and comparative example were measured by the evaluation methods given below.

### (4)-1 Scratch resistance test

The lens surface was rubbed with #0000 steel wools and the difficulty in imparting scratches was visually determined. The determination scale was as follows:
A. Almost no scratching even with vigorous rubbing.
B. Substantial scratching with vigorous rubbing. C. Scratches equivalent to those on lens substrate.

### (4)-2 Adhesion test

100 cross cuts were made at 1 mm intervals, adhesive tape (tradename "Cellotape", product of Nichiban (Ltd.)) was strongly adhered and quickly peeled off, and the presence or absence of cured coating film peeling was checked.

### (4)-3 Appearance

Transparency and surface condition were visually examined indoors.

### (4)-4 Impact resistance test

A steel ball drop test was conducted.

Specifically, 16 g or 1 kg steel balls were allowed to drop naturally onto the center of the lens from a height of 1.27 m. Lenses that did not crack passed.

### A: passed, B: failed

### (Embodiment 8-1)

### (Preparation of Coating Solution)

While stirring 141 weight parts of water-dispersed colloidal silica (40 percent solid component, average particle size 15 millimicrons; component (F)) in a vessel made of glass and equipped with magnetic stirrer, 30 weight parts of acetic acid were added and the mixture was thoroughly mixed by stirring. Subsequently, 74 weight parts of γ - glycidoxypropyltrimethoxysilane (component (E)) were added dropwise and stirred for 24 hours at 5°C. Next, 100 weight parts of propylene glycol monomethylether, 150 weight parts of isopropyl alcohol, 0.2 part of silicone surfactant, and 7.5 weight parts of curing agent in the form of aluminum acetyl acetonate were added and the mixture was thoroughly stirred and filtered to prepare a coating composition solution.

### (Forming of cured coating film)

The plastic lens (transparent molded article) produced in Embodiment 1 mentioned above was thoroughly cleaned by immersion for 5 min in a 10 percent sodium hydroxide aqueous solution at 55°C, after which a coating solution prepared by the above-described method was coated by dipping (lifting rate 20 cm/min) and heated for 2 hours at 120°C to form a cured coating film. Various evaluations were then conducted. As indicated in Table 2, the plastic lens (transparent molded article) having a cured coating film that was obtained had good scratch resistance, adhesion, appearance, and impact resistance.

### (Embodiment 8-2)

To a glass vessel equipped with magnetic stirrer, 189 weight parts of isopropyl alcohol-dispersed colloidal silica (made by Nissan Kagaku Kogyo: 30 percent solid component, average particle size 15 millimicrons; component (F)) were added, and 74 weight parts of γ -glycidoxypropyltrimethoxysilane (component (E)) were then added with stirring. While stirring, 19 weight parts of 10⁻² normal hydrochloric acid were added dropwise and stirring was conducted for 24 hours at 5°C. Next, 100 weight parts of propylene glycol monomethylether, 100 weight parts of isopropyl alcohol, 0.2 weight part of silicone surfactant, and 7.5 weight parts of curing agent in the form of aluminum acetyl acetonate were added and thoroughly mixed. The mixture was filtered to prepare a coating composition solution. Other than above-mentioned matter, the operation was conducted in the same manner as in Embodiment 8-1.

As shown in Table 2, the plastic lens (transparent molded article) having a cured coating film that was obtained exhibited the same good scratch resistance, adhesion, external appearance, and impact resistance as Embodiment 8-1.

### (Embodiment 8-3)

To a glass vessel equipped with magnetic stirrer, while 94 weight parts of a compound sol (made by Nissan Kagaku Kogyo, tradename HIS-40MH: methanol dispersion, 30 percent solid component; component (F)) comprised chiefly of tin oxide, tungsten oxide, zirconia oxide, and silicon oxide, and 94 weight parts of n-propyl cellosolve-dispersed colloidal silica (made by Nissan Kagaku Kogyo: tradename NPC-ST30, solid component 30 percent; component (F)) were thoroughly mixed with stirring, 67.0 weight parts of an organic silicon compound in the form of γ -glycidoxypropyltrimethoxysilane (component (E)) were added dropwise with stirring. Following the dropwise addition, 16 weight parts of 10⁻² normal hydrochloric acid, 230 weight parts of a solvent in the form of propylene glycol monomethylether, 0.2 weight part of silicone surfactant, and 3 weight parts of a curing promoter in the form of aluminum acetyl acetonate were added. The mixture was thoroughly stirred and filtered to obtain a coating composition.

Other than the above-mentioned matter, the operation was conducted in the same manner as in Embodiment 8-1.

As shown in Table 2, the plastic lens (transparent molded article) having a cured coating film that was obtained exhibited the same good scratch resistance, adhesion, external appearance, and impact resistance as Embodiment 8-1.

### (Comparative Examples 8-1 to 8-3)

With the exception that a lens comprised of diethylene glycol bisallylcarbonate polymer was employed in place of the plastic lens (transparent molded article) employed in Embodiments 8-1 to 8-3, the same operation as in Embodiments 8-1 to 8-3 was conducted. As shown in Table 2, these lenses all had poor impact resistance relative to the plastic lenses (transparent molded articles) in the first aspect of the present invention.

**Table 2**

| | Scratch resistance | Adhesion | Appearance | Impact resistance | |
|---|---|---|---|---|---|
| | | | | 16g | 1kg |
| Embodiment 8-1 | A | 100/100 | Good | A | A |
| Embodiment 8-2 | A | 100/100 | Good | A | A |
| Embodiment 8-3 | A | 100/100 | Good | A | A |
| Comp.Ex.8-1 | A | 100/100 | Good | A | B |
| Comp.Ex.8-2 | A | 100/100 | Good | A | B |
| Comp.Ex.8-3 | A | 100/100 | Good | A | B |

The embodiments in which an antireflective film was applied to an optical member having a hard coat layer are described below. Although an antireflective film can be applied without an intermediate hard coat layer, an intermediate hard coat layer is preferred from the perspectives of strength, heat resistance, abrasion resistance, chemical resistance and the like.

Evaluation of the physical properties of the optical members having an antireflective film obtained in the embodiments was conducted by the following test methods.

### (1) Luminous reflectance

The front surface side luminous reflectance Y of the plastic lenses was measured with a Hitachi U-3410 Spectrophotometer by coating the inside surface with a black magic marker, eliminating reflection, and measuring the luminous reflectance.

The back surface side luminous reflectance Y of the plastic lenses was measured with a Hitachi U-3410 Spectrophotometer by first measuring the luminous reflectance of a lens having an antireflective layer on the concave surface side, measuring the luminous reflectance (including the back surface side luminous reflectance) of the concave surface of the comparative product in which the same antireflective layer was provided, the convex surface was coated with a black magic marker, and reflection was eliminated. The back surface side luminous reflectance Y was calculated by subtracting the previously measured luminous reflectance from the concave surface luminous reflectance of the comparative product.

### (2) Adhesion

One hundred squares of 1 mm x 1 mm were made with a razor on the surface of a plastic lens, cellophane tape was adhered on the squares, the tape was pulled off in one motion, and the evaluation was conducted from the number of remaining squares. In the table, this is given as the number of remaining over 100.

### (3) Abrasion resistance

A 1kgf/cm² load was applied with steel wool to the surface of a plastic lens and the surface was scrubbed at 20 strokes. Evaluation was conducted from the surface condition according to the following criteria:
UA: Almost no scratching
A: Several light scratches
B: Numerous light scratches, several heavy scratches
C: Numerous light scratches, numerous heavy scratches
D: Nearly peeled

### (4) Heat resistance

The plastic lens was heated in a dry oven for 1 hour and the temperature at which cracking occurred was measured.

### (5) Alkali resistance

The plastic lens was immersed for 1 hour in a 10 percent NaOH aqueous solution and evaluation was conducted from the surface condition according to the following criteria:
UA: Almost no change
A: Several point-shaped film peelings
B: Dot-shaped film peelings over entire surface
C: Dot-shaped peelings over entire surface, several plane-shaped peelings
D: Film peeled nearly over entire surface

### (6) Examination of appearance after insertion into frame

The plastic lenses were inserted into frames and an examination of the appearance of the antireflective film was conducted.
UA: No abnormality in darkroom, under fluorescent lamp and high-pressure mercury lamp.
A: No abnormality when inspected in darkroom and under fluorescent lamp.
B: Fogging present when inspected in darkroom and under fluorescent lamp.
C: Slight fogging present indoors and under fluorescent lamp.
D: Fogging present indoors and under fluorescent lamp.

### Embodiment 19

Plastic lenses having hard coat layers obtained by the method described in Reference Examples 1 and 2 further below were pretreated by an ion gun (acceleration voltage 250 V, current 160 mA, irradiation duration 60 sec) using Ar gas or oxygen gas. They were then heated to 85°C and a first layer (refractive index 1.46, thickness 0.4233 λ (where λ is 500 nm; identical below)) comprised of SiO₂ was formed as an undercoating by vacuum evaporation (vacuum degree of 2 x 10⁻⁵ Torr) on the above-described hard coat layer.

Next, formed was a 1/4 λ layer corresponding to a medium refractive index layer comprised of both a second layer (refractive index 2.21, film thickness 0.0374 λ) formed by heating at an electron gun output current of 170 mA a three-component evaporation composition A (weight ratio: Nb₂O₅:ZrO₂:Y₂O₃ = 90:5:5) obtained by admixing Nb₂O₅ powder, ZrO₂ powder, and Y₂O₃ powder, pressing the mixture at a pressure of 300 kg/cm², and sintering it at a temperature of 1,300°C, and a third layer (refractive index 1.46, film thickness 0.0962 λ) comprised of SiO₂.

A 1/2 λ layer corresponding to a high refractive index layer comprised of a fourth layer (refractive index 2.21, film thickness 0.1396 λ) formed from the above-mentioned evaporation composition A, a fifth layer (refractive index 1.46, film thickness 0.0674 λ) comprised of SiO₂, and a sixth layer (refractive index 2.21, film thickness 0.1584 λ) formed from the above-mentioned evaporation substance A was formed on the 1/4 λ layer corresponding to a medium refractive index layer.

A 1/4 λ low refractive index layer comprised of SiO₂ was formed as the seventh layer on the 1/2 λ layer corresponding to a high refractive index layer to obtain a plastic lens having an antireflective film.

This operation was also conducted on the back surface of the plastic lens to obtain a plastic lens having antireflective films on both surfaces.

Each of the above-described second through seventh layers was formed by vacuum evaporation in the same manner as the first layer.

Table 5 gives various conditions such as the evaporation composition and thickness of the above-described antireflective films.

Table 5 also gives the results of evaluation of (1)-(6) above for the plastic lenses obtained as set forth above.

The antireflective film of the present embodiment comprises, from the substrate side, a 1/4 λ layer (corresponding to a medium refractive index layer), a 1/2 λ layer (corresponding to a high refractive index layer), and 1/4 λ layer (corresponding to a low refractive index layer). A layer of SiO₂, which is a substance of low refractive index, was inserted between the two high refractive index layers formed from the evaporation composition A in the 1/2 λ layer (this applies to the fourth, fifth and sixth layers of the embodiment).

By such a combination, the film thickness of the high refractive index layer, normally requiring a film thickness of about 0.5 λ, can be reduced to about 0.3 λ by combining the fourth and sixth layers.

This is because the combined refractive index of the fourth, fifth and sixth layer, inserted the SiO₂ layer between them, can be made 2.02-2.08. In the present configuration, it was about 2.04.

The use of the present configuration is undesirable when the refractive index in the high refractive index substance is not greater than 2.1 because the antireflective property decreases.

Since the high refractive index substance layer has poorer structural strength and heat resistance than the SiO₂ layer, the insertion of SiO₂ with high structural strength and heat resistance could increase the strength and heat resistance of the antireflective film.

Since the evaporation substance A had a high refractive index of not less than 2.2 when evaporated only with an electron gun (an ion assist method must be employed to achieve the same refractive index in a TiO₂ layer, which is commonly employed as the high refractive index substance), even when a thin layer of SiO₂ of a low refractive index substance was intermediately inserted, there was little influence of decrease in refractive index and it was possible to form a low reflectance antireflective film.

**Table 5**

| | | Embodiment 19 | |
|---|---|---|---|
| Plastic lens substrate | | Reference Example 1 | |
| Hard coat layer | | Reference Example 2 | |
| Ion acceleration voltage of pretreatment | | 250 V | |
| Current | | 160 mA | |
| Irradiation duration | | 60 sec | |
| | | Substance/Film thickness | |
| First layer (undercoating layer) | | SiO₂ | 0.4233 λ |
| Second layer | 1/4 λ layer | A | 0.0374 λ |
| Third layer | | SiO₂ | 0.0962 λ |
| Fourth layer | 1/2 λ layer | A | 0.1396 λ |
| Fifth layer | | SiO₂ | 0.0674 λ |
| Sixth layer | | A | 0.1584 λ |
| Seventh layer | 1/4 λ layer | SiO₂ | 0.2747 λ |
| Evaluation of performance of plastic lens | | | |
| Luminous reflectance Y% (one surface) | | 0.42% | |
| Luminous transmittance Y% | | 99.0% | |
| Adhesion | | 100/100 | |
| Abrasion resistance | | UA | |
| Heat resistance | | 110°C | |
| Alkali resistance | | UA | |
| Examination of external appearance after insertion into frame | | UA | |

### Embodiment 20 (Ion Assist Method)

Plastic lens having hard coat layers obtained by the methods shown in Reference Examples 1 and 2, described further below, was pretreated (acceleration voltage 250 V, current 160 mA, irradiation duration 60 sec) with an ion gun using Ar gas or oxygen gas and then heated to 85°C. A first layer comprised of SiO₂ (refractive index 1.46, film thickness 0.4230 λ (where λ was 500 nm; identical below)) was formed as an undercoating layer by vacuum evaporation (vacuum of 2 x 10⁻⁵ Torr) on the above-mentioned hard coat layers.

Formed was a 1/4 λ layer corresponding to a medium refractive index layer comprised of a second layer (refractive index 2.27, film thickness 0.0416 λ, ion assist output 350 V, 150 mA, O₂ gas and Ar gas) formed from three-component evaporation composition A (weight ratio Nb₂O₅:ZrO₂:Y₂O₃ = 90:5:5) at an electron gun output current of 170 mA jointly using an ion assist, and a third layer (refractive index 1.46, film thickness 0.0969 λ) comprised of SiO₂.

On the 1/4 λ layer corresponding to a medium refractive index layer, formed was a 1/2 λ layer corresponding to a high refractive index layer, comprised of a fourth layer (refractive index 2.27, film thickness 0.1370 λ) formed from the above-mentioned evaporation composition A (jointly employing ion assist), a fifth layer (refractive index 1.46, film thickness 0.0696 λ) comprised of SiO₂, and a sixth layer (refractive index 2.27, film thickness 0.1461 λ) formed from the above-mentioned evaporation substance A (jointly employing ion assist).

On the 1/2 λ layer corresponding to a high refractive index layer, a 1/4 λ low refractive index layer comprised of SiO₂ was then formed as the seventh layer to obtain a plastic lens having an antireflective film. This operation was also conducted on the back surface of the plastic lens, yielding a plastic lens having antireflective layers on both surfaces.

A mixture gas of oxygen and argon was employed as the ionized gas in the ion assist.

The results are given in Table 6.

**Table 6**

| | | Embodiment 20 | | |
|---|---|---|---|---|
| Plastic lens substrate | | Reference Example 1 | | |
| Hard coat layer | | Reference Example 2 | | |
| Ion acceleration voltage of pretreatment | | 250V | | |
| Current | | 160mA | | |
| Irradiation duration | | 60sec | | |
| | | Substance/ Film thickness | | Setting value of ion gun |
| First layer (undercoating layer) | | SiO₂ | 0.4230 λ | - |
| Second layer | 1/4 λ layer | A | 0.0416 λ | 350V 150mA O₂+Ar gas |
| Third layer | | SiO₂ | 0.0969 λ | |
| Fourth layer | 1/2 λ layer | A | 0.1370 λ | 350V 150mA O₂+Ar gas |
| Fifth layer | | SiO₂ | 0.0698 λ | - |
| Sixth layer | | A | 0.1461 λ | 350V 150mA O₂+Ar gas |
| Seventh layer | 1/4 λ layer | SiO₂ | 0.2752 λ | - |
| Evaluation of performance of plastic lens | | | | |
| Luminous reflectance Y% (one surface) | | 0.42% | | |
| Luminous transmittance Y% | | 99.0% | | |
| Adhesion | | 100/100 | | |
| Abrasion resistance | | UA | | |
| Heat resistance | | 120°C | | |
| Alkali resistance | | UA | | |
| Examination of external appearance after insertion into frame | | UA | | |

### Embodiment 21 (1/4 λ layer - 1/4 λ layer - 1/2 λ layer - 1/4 λ layer)

A plastic lens having a hard coat layer obtained by the manner described in Reference Examples 1 and 2 further below was pretreated (acceleration voltage 250 V, current 160 mA, irradiation duration 60 sec) with an ion gun using Ar gas or oxygen gas and then heated to 85°C. A first layer (refractive index 1.46, film thickness 0.4670 λ (where λ was 500 nm; identical below)) comprised of SiO₂ was formed as an undercoating layer by vacuum evaporation (vacuum degree of 2 x 10⁻⁵ Torr) on the hard coat layer mentioned above.

Formed was a 1/4 λ layer A corresponding to a medium refractive index layer comprised of a second layer (refractive index 2.21, film thickness 0.014 λ) formed by heating a three-component evaporation composition A (weight ratio Nb₂O₅:ZrO₂:Y₂O₃ = 90:5:5) at an electron gun output current of 170 mA and a third layer (refractive index 1.46, film thickness 0.2001 λ) comprised of SiO₂.

Next, formed was a 1/4 λ layer B corresponding to a medium refractive index layer, comprised of a fourth layer (refractive index 2.21, film thickness 0.0390 λ) formed by heating a three-component evaporation composition A (weight ratio Nb₂O₅:ZrO₂:Y₂O₃ = 90:5:5) at an electron gun output current of 170 mA and a fifth layer (refractive index 1.46, film thickness 0.1420 λ) comprised of SiO₂.

A 1/2 λ layer corresponding to a high refractive index layer comprised of a sixth layer (refractive index 2.21, film thickness 0.1381 λ) formed from an evaporation composition A, a seventh layer (refractive index 1.46, film thickness 0.0805 λ) comprised of SiO₂, and an eighth layer (refractive index 2.21, film thickness 0.1524 λ) formed from the above-mentioned evaporation substance A was formed on the 1/4 λ layers A and B.

A 1/4 λ low refractive index layer comprised of SiO₂ was then formed as the ninth layer on the 1/2 λ layer corresponding to a high refractive index layer to obtain a plastic lens having an antireflective film. This operation was also conducted on the back surface of the plastic lens, yielding a plastic lens having antireflective layers on both surfaces.

The results are given in Table 7.

**Table 7**

| | | | Embodiment 21 | |
|---|---|---|---|---|
| Plastic lens substrate | | | Reference Example 1 | |
| Hard coat layer | | | Reference Example 2 | |
| Ion acceleration voltage of pretreatment | | | 250V | |
| Current | | | 160mA | |
| Irradiation duration | | | 60sec | |
| | | | Substance/Film thickness | |
| First layer (undercoating layer) | | | SiO₂ | 0.4670 λ |
| Second layer | 1/4 λ layer A | | A | 0.0140 λ |
| Third layer | | | SiO₂ | 0.2001 λ |
| Fourth layer | 1/4 λ layer B | | A | 0.0390 λ |
| Fifth layer | | | SiO₂ | 0.1420 λ |
| Sixth layer | 1/2 λ layer | | A | 0.1381 λ |
| Seventh layer | | | SiO₂ | 0.0805 λ |
| Eighth layer | | | A | 0.1524 λ |
| Ninth layer | 1/4 λ layer | | SiO₂ | 0.2703 λ |
| Evaluation of performance of plastic lens | | | | |
| Luminous reflectance Y% (one surface) | | 0.30% | | |
| Luminous transmittance Y% | | 99.3% | | |
| Adhesion | | 100/100 | | |
| Abrasion resistance | | UA | | |
| Heat resistance | | 110°C | | |
| Alkali resistance | | UA | | |
| Examination of external appearance after insertion into frame | | UA | | |

### Embodiment 22 (Ion Assist Method + 1/4 λ layer - 1/4 λ layer -1/2 λ layer - 1/4 λ layer)

A plastic lens having a hard coat layer obtained by the manner described in Reference Examples 1 and 2 further below was pretreated (acceleration voltage 250 V, current 160 mA, irradiation duration 60 sec) with an ion gun using Ar gas or oxygen gas and then heated to 85°C. A first layer (refractive index 1.46, film thickness 0.4670 λ (where λ was 500 nm; identical below)) comprised of SiO₂ was formed as an undercoating layer by vacuum evaporation (vacuum degree of 2 x 10⁻⁵ Torr) on the hard coat layer.

Formed was a 1/4 λ layer A corresponding to a medium refractive index layer, comprised of a second layer (refractive index 2.27, film thickness 0.0136 λ) formed from a three-component evaporation composition λ (weight ratio Nb₂O₅:ZrO₂:Y₂O₅ = 90:5:5) at an electron gun output current of 170 mA jointly using ion assist, and a third layer (refractive index 1.46, film thickness 0.2044 λ) comprised of SiO₂.

Next, formed was a 1/4 λ layer B corresponding to a medium refractive index layer, comprised of a fourth layer (refractive index 2.27, film thickness 0.0445 λ) formed from a three-component evaporation composition A (weight ratio Nb₂O₅:ZrO₂:Y₂O₃ = 90:5:5) at an electron gun output current of 170 mA jointly using ion assist, and a fifth layer (refractive index 1.46, film thickness 0.1505 λ) comprised of SiO₂.

A 1/2 λ layer corresponding to a high refractive index layer comprised of a sixth layer (refractive index 2.27, film thickness 0.1367 λ) formed from the above-mentioned evaporation composition A (jointly using ion assist), a seventh layer (refractive index 1.46, film thickness 0.0892 λ) comprised of SiO₂, and an eighth layer (refractive index 2.27, film thickness 0.1592 λ) formed from the above-mentioned evaporation substance A was formed on the 1/4 λ layers A and B corresponding to a medium refractive index layers.

A 1/4 λ low refractive index layer comprised of SiO₂ was then formed as the ninth layer on the high refractive index layer to obtain a plastic lens having an antireflective film. This operation was also conducted on the back surface of the plastic lens, yielding a plastic lens having antireflective layers on both surfaces.

The results are given in Table 8.

**Table 8**

| | | Embodiment 22 | | |
|---|---|---|---|---|
| Plastic lens substrate | | Reference Example 1 | | |
| Hard coat layer | | Reference Example 2 | | |
| Ion acceleration voltage of pretreatment | | 250V | | |
| Current | | 160mA | | |
| Irradiation duration | | 60sec | | |
| | | Substance/Film thickness | | Setting value of ion gun |
| First layer (undercoating layer) | | SiO₂ | 0.4670 λ | - |
| Second layer | 1/4 λ layer A | A | 0.0136 λ | 350V 150mA O₂+Ar gas |
| Third layer | | SiO₂ | 0.2044 λ | - |
| Fourth layer | 1/4 λ layer B | A | 0.0445λ | 350V 150mA O₂+Ar gas |
| Fifth layer | | SiO₂ | 0.1505 λ | - |
| Sixth layer | 1/2 λ layer | A | 0.1367 λ | 350V 150mA O₂+Ar gas |
| Seventh layer | | SiO₂ | 0.0892 λ | - |
| Eighth layer | | A | 0.1592 λ | 350V 150mA O₂+Ar gas |
| Ninth layer | 1/4 λ layer | SiO₂ | 0.2894 λ | - |
| Evaluation of performance of plastic lens | | | | |
| Luminous reflectance Y% (one surface) | | 0.23% | | |
| Luminous transmittance Y% | | 99.5% | | |
| Adhesion | | 100/100 | | |
| Abrasion resistance | | UA | | |
| Heat resistance | | 120°C | | |
| Alkali resistance | | UA | | |
| Examination of external appearance after insertion into frame | | UA | | |

### Embodiment 23

The above-mentioned plastic lens having a hard coat layer obtained by the manner described in Reference Examples 1 and 2 further below was pretreated (acceleration voltage 250 V, current 160 mA, irradiation duration 60 sec) with an ion gun using Ar gas or oxygen gas and then heated to 85°C. A first layer (refractive index 1.46, film thickness 0.4222 λ (where λ was 500 nm; identical below)) comprised of SiO₂ was formed as an undercoating layer by vacuum evaporation (vacuum degree of 2 x 10⁻⁵ Torr) on the hard coat layer.

Formed was a 1/4 λ layer corresponding to a medium refractive index layer, comprised of a second layer (refractive index 2.21, film thickness 0.0458 λ) formed by heating a three-component evaporation composition A (weight ratio Nb₂O₅:ZrO₂:Y₂O₃ = 90:5:5) at an electron gun output current of 170 mA, and a third layer (refractive index 1.46, film thickness 0.0814 λ) comprised of SiO₂.

Next, on the 1/4 λ layer corresponding a medium refractive index layer, formed was a 1/2 λ layer corresponding to a high refractive index layer, comprised of a fourth layer (refractive index 2.21, film thickness 0.1172 λ) formed from the above-mentioned evaporation composition A, a fifth layer (refractive index 1.46, film thickness 0.0280 λ) comprised of SiO₂, a sixth layer (refractive index 2.21, film thickness 0.1143 λ) formed from the above-mentioned evaporation substance A, a seventh layer (refractive index 1.46, film thickness 0.0246 λ) comprised of SiO₂, and an eighth layer (refractive index 2.21, film thickness 0.1280 λ) formed from the above-mentioned evaporation substance A.

A 1/4 λ low refractive index layer comprised of SiO₂ was then formed as the ninth layer on the 1/2 λ layer corresponding to a high refractive index layer to obtain a plastic lens having an antireflective film. This operation was also conducted on the back surface of the plastic lens, yielding a plastic lens having antireflective layers on both surfaces.

**Table 9**

| | | Embodiment 23 | |
|---|---|---|---|
| Plastic lens substrate | | Reference Example 1 | |
| Hard coat layer | | Reference Example 2 | |
| Ion acceleration voltage of pretreatment | | 250V | |
| Current | | 160mA | |
| Irradiation duration | | 60sec | |
| | | Substance/Film thickness | |
| First layer (undercoating layer) | | SiO₂ | 0.4222 λ |
| Second layer | 1/4 λ layer | A | 0.0458 λ |
| Third layer | | SiO₂ | 0.0814 λ |
| Fourth layer | 1/2 λ layer | A | 0.1172 λ |
| Fifth layer | | SiO₂ | 0.0280 λ |
| Sixth layer | | A | 0.1143 λ |
| Seventh layer | | SiO₂ | 0.0246 λ |
| Eighth layer | | A | 0.1280 λ |
| Ninth layer | 1/4 λ layer | SiO₂ | 0.2525 λ |
| Evaluation of performance of plastic lens | | | |
| Luminous reflectance Y% (one surface) | | 0.42% | |
| Luminous transmittance Y% | | 99.0% | |
| Adhesion | | 100/100 | |
| Abrasion resistance | | UA | |
| Heat resistance | | 110°C | |
| Alkali resistance | | UA | |
| Examination of external appearance after insertion into frame | | UA | |

### Reference Example 1

To 100 weight parts of isocyanate terminal prepolymer having an isocyanate group content of 13 percent and comprised of polytetramethylene glycol with an average molecular weight of 400 and 4,4'-methylenebis(cyclohexyl isocyanate), 0.024 weight part of monobutoxyethyl acid phosphate and 0.036 weight parts of di(butoxyethyl) acid phosphate were added in advance. The mixture was uniformly mixed and defoamed. Next, 25.5 weight parts of a mixture of 3,5-diethyl-2,4-toluene diamine and 3,5-diethyl-2,6-toluene diamine were uniformly admixed at 60-70°C and stirred in short time at high speed. Immediately after stirring, the mixture was poured into a lens-forming glass mold and polymerized with heating for 15 hours at 120°C to obtain a plastic lens.

### Reference Example 2

### (Preparation of coating solution)

A coating composition solution was prepared by the same method as in Embodiment 8-1 of the first aspect above.

### (Forming of hard coat layer)

The plastic lens comprised of the polyurethane urea polymer of Reference Example 1 was thoroughly cleaned by immersion for 5 min in a 10 percent sodium hydroxide aqueous solution at 55°C, after which a coating solution prepared by the above-described method was coated by dipping (lifting rate 20 cm/min) and heated for 2 hours at 120°C to form a hard coat layer.

### Industrial applicability

According to the first aspect of the present invention, a molded article having excellent transparency and mold releasing property from a forming mold that is suited to optical applications, and a method of manufacturing the same can be provided. In particular, a molded article provided with good mold releasing property that is suited to optical applications without loss of transparency of polyurethane urea material as disclosed in US 6,127,505 A mentioned above, and a method of manufacturing the same can be provided.

Furthermore, an optical member comprising a substrate in the form of a material comprised of polyurethane urea polymer and having an antireflective layer that is suited to the substrate and has a good heat resistance and high film strength as well as that is undergone little reduction of heat resistance over time can be provided.

## Claims

1. A transparent molded article comprised of a polymer of the following components (A) and (B), **characterized in that** said polymer further comprises the following components (C) and (D),
Component (A) being an isocyanate terminal prepolymer in the form of a reaction product of an aliphatic diisocyanate having an intramolecular cyclic structure and a diol having an average molecular weight of 300-2,500,
Component (B) being one or more aromatic diamines denoted by general formula (I), wherein in general formula (I), R₁, R₂ and R₃ are each independently any of a methyl, ethyl or thiomethyl group,
Component (C) being one or more phosphoric acid monoesters denoted by general formula (II), wherein in general formula (II), R₄ is an alkyl group with a carbon number of 1-10 and n₁ is 1 or 2, and
Component (D) being one or more phosphoric acid diesters denoted by general formula (III), wherein in general formula (III), R₅ and R₆ are each independently an alkyl group with a carbon number of 1-10 and n₂ and n₃ are 1 or 2;

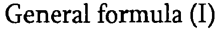

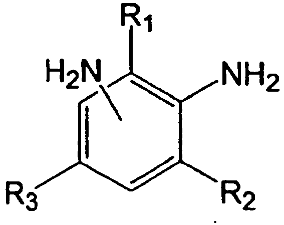

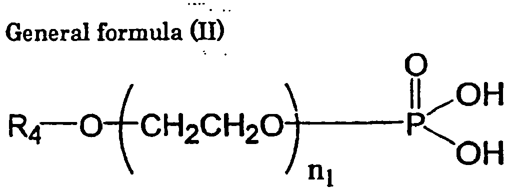

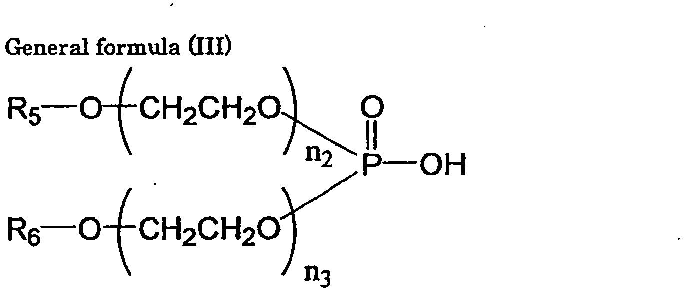

2. The transparent molded article according to claim 1, wherein the total weight of components (C) and (D) ranges from 0.005 to 0.1 percent of the total weight of components (A), (B), (C) and (D).

3. The transparent molded article according to claim 1 or 2, wherein the weight of component (C) ranges from 30 to 70 percent of the total weight of components (C) and (D).

4. The transparent molded article according to any of claims 1-3, wherein the aliphatic diisocyanate having an intramolecular cyclic structure, that is a starting material of component (A), is an alicyclic diisocyanate.

5. The transparent molded article according to claim 4, wherein the alicyclic diisocyanate is at least one selected from the group consisting of 4,4'-methylenebis(cyclohexyl isocyanate), isophorone diisocyanate, 1,3-bis(isocyanate methyl)cyclohexane and norbornene diisocyanate.

6. The transparent molded article according to any of claims 1-5, wherein the diol having an average molecular weight of 300-2,500, that is a starting material of component (A), is a polyether diol or polyester diol.

7. The transparent molded article according to any of claims 1-6, wherein the isocyanate group content of component (A) ranges from 10 to 20 weight percent.

8. The transparent molded article according to any of claims 1-7, wherein, in general formula (I), R₁ is a methyl group, and R₂ and R₃ are independently a ethyl group or thiomethyl group.

9. The transparent molded article according to any of claims 1-8, wherein the molar ratio of the isocyanate group of component (A) to an amino group of component (B) ranges from 1.00 to 1.15.

10. The transparent molded article according to any of claims 1-9, wherein R₄ is an alkyl group with a carbon number of 2-6 in general formula (II), and R₅ and R₆ are each independently an alkyl group with a carbon number of 2-6 in general formula (III).

11. The transparent molded article according to any of claims 1-10, wherein the transparent molded article is a lens.

12. The transparent molded article according to claim 11, wherein the lens is an eyewear lens.

13. The transparent molded article according to any of claims 1-12, wherein said transparent molded article has a cured coating film on the surface.

14. The transparent molded article according to claim 13, wherein said cured coating film is obtained from a coating composition comprising components (E) and (F),
Component (E) being an organic silicon compound denoted by general formula (IV) or a hydrolysis product thereof,
(R₇)ₐ(R₉)_{b}Si(OR₈)_{4-(a+b)} (IV),
wherein in general formula (IV), R₇ denotes an organic group comprising an epoxy group, methacryloxy group, mercapto group, amino group, or phenyl group; R₈ denotes an alkyl group with a carbon number of 1-4 or an acyl group with a carbon number of 1-4; R₉ denotes an alkyl group with a carbon number of 1-6; and a and b denote an integer 1 or 0; and
Component (F) being metal oxide colloid particles.

15. The transparent molded article according to any of claims 1-14, wherein said transparent molded article has an antireflective film on the surface or on said cured coating film.

16. The transparent molded article according to claim 15, **characterized in that** said antireflective film is a multilayer antireflective film, and at least one layer of the multilayer antireflective film is a high refractive index layer comprising niobium oxide.

17. A method of manufacturing a transparent molded article, comprising forming a molded article by pouring a mixture of components (A), (B), (C) and (D) according to any of claims 1 to 10 into a forming mold, and then polymerizing components (A) and (B).

18. The method of manufacturing a transparent molded article according to claim 17, wherein said mixture is prepared by further mixing component (B) with a mixture of components (A), (C) and (D).

## Patentansprüche

1. Transparenter Formkörper, der ein Polymer der folgenden Komponenten (A) und (B) umfasst, **dadurch gekennzeichnet, dass** das Polymer weiterhin die folgenden Komponenten (C) und (D) umfasst, wobei
die Komponente (A) ein terminales Isocyanat-Präpolymer darstellt, das in Form eines Reaktionsproduktes aus einem aliphatischen Diisocyanat, das eine intramolekulare zyklische Struktur aufweist, und einem Diol, das ein durchschnittliches Molekulargewicht von 300-2500 besitzt, vorliegt,
die Komponente (B) ein oder mehrere aromatische Diamine darstellt, entsprechend der allgemeinen Formel (I), wobei in der allgemeinen Formel (I) R₁, R₂ und R₃ unabhängig voneinander jeweils eine Methyl-, Ethyl- oder Thiomethylgruppe bezeichnen,
die Komponente C einen oder mehrere Phosphorsäuremonoester darstellt, entsprechend der allgemeinen Formel (II), wobei in der allgemeinen Formel (II) R₄ eine Alkylgruppe mit einer Kohlenstoffanzahl von 1 bis 10 bezeichnet, und n₁ 1 oder 2 ist; und
die Komponente D einen oder mehrere Phosphorsäurediester darstellt, entsprechend der allgemeinen Formel (III), wobei in der allgemeinen Formel (III) R₅ und R₆ unabhängig voneinander jeweils eine Alkylgruppe mit einer Kohlenstoffanzahl von 1 bis 10 bezeichnet, und n₂ und n₃ 1 oder 2 sind;

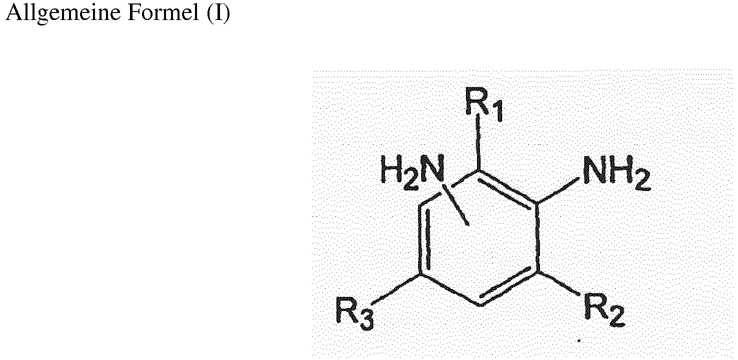

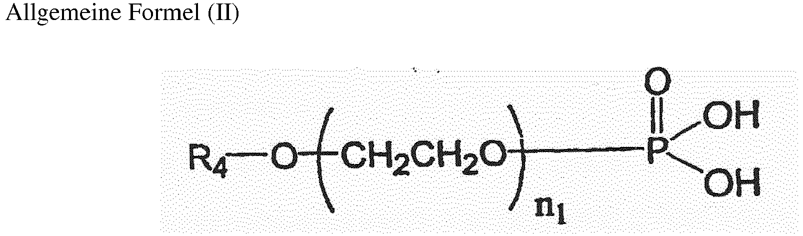

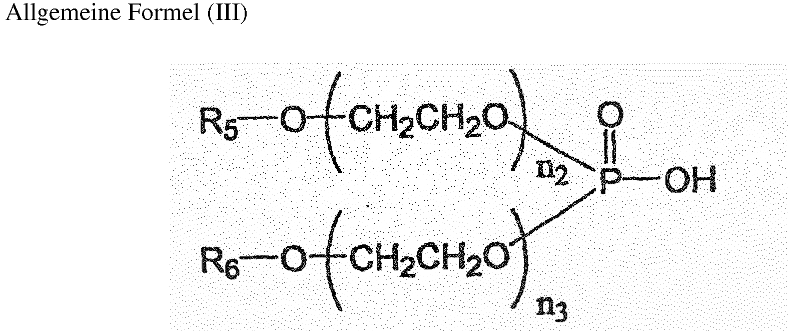

2. Transparenter Formkörper nach Anspruch 1, wobei das Gesamtgewicht der Komponenten (C) und (D) in einem Bereich von 0,005 bis 0,1 Prozent des Gesamtgewichts der Komponenten (A), (B), (C) und (D) liegt.

3. Transparenter Formkörper nach Anspruch 1 oder 2, wobei das Gewicht der Komponente (C) in einem Bereich von 30 bis 70 Prozent des Gesamtgewichts der Komponenten (C) und (D) liegt.

4. Transparenter Formkörper nach einem der Ansprüche 1 bis 3, wobei das aliphatische Diisocyanat, das eine intramolekulare zyklische Struktur aufweist und das Ausgangsmaterial für Komponente (A) ist, ein alizyklisches Diisocyanat ist.

5. Transparenter Formkörper nach Anspruch 4, wobei das alizyklische Diisocyanat wenigstens eines ist, das ausgewählt ist aus der Gruppe, bestehend aus 4,4'-Methylen-bis(cyclohexyl-isocyanat), Isophoron-diisocyanat, 1,3-Bis(isocyanatomethyl)cyclohexan und Norbornendiisocyanat.

6. Transparenter Formkörper nach einem der Ansprüche 1 bis 5, wobei das Diol, welches ein mittleres Molekulargewicht von 300 bis 2500 aufweist und ein Ausgangsmaterial der Komponente (A) ist, ein Polyetherdiol oder ein Polyesterdiol ist.

7. Transparenter Formkörper nach einem der Ansprüche 1 bis 6, wobei der Gehalt an Isocyanatgruppen der Komponente (A) in einem Bereich von 10 bis 20 Gewichtsprozent liegt.

8. Transparenter Formkörper nach einem der Ansprüche 1 bis 7, wobei in der allgemeinen Formel (I) R₁ eine Methylgruppe ist und R₂ und R₃ unabhängig voneinander jeweils eine Ethylgruppe oder eine Thiomethylgruppe sind.

9. Transparenter Formkörper nach einem der Ansprüche 1 bis 8, wobei das molare Verhältnis von Isocyanatgruppen der Komponente (A) zu einer Aminogruppe der Komponente (B) in einem Bereich von 1,00 bis 1,15 liegt.

10. Transparenter Formkörper nach einem der Ansprüche 1 bis 9, wobei R₄ eine Alkylgruppe mit einer Kohlenstoffanzahl von 2 bis 6 in der allgemeinen Formel (II) ist, und R₅ und R₆ unabhängig voneinander jeweils eine Alkylgruppe mit einer Kohlenstoffanzahl von 2 bis 6 in der allgemeinen Formel (III) sind.

11. Transparenter Formkörper nach einem der Ansprüche 1 bis 10, wobei der transparente Formkörper eine Linse ist.

12. Transparenter Formkörper nach einem der Ansprüche 1 bis 11, wobei die Linse eine Brillenlinse ist.

13. Transparenter Formkörper nach einem der Ansprüche 1 bis 12, wobei der transparente Formkörper einen ausgehärteten Beschichtungsfilm auf der Oberfläche aufweist.

14. Transparenter Formkörper nach Anspruch 13, wobei der ausgehärtete Beschichtungsfilm mittels einer Beschichtungskomposition erhalten wird, welche die Komponenten (E) und (F) enthält, worin
die Komponente (E) eine organische Siliziumverbindung der allgemeinen Formel (IV) darstellt oder ein Hydrolyseprodukt davon,
(R₇)ₐ(R₉)_{b}Si(OR₈)_{4-(a+b)} (IV)
wobei in der allgemeinen Formel (IV) R₇ eine organische Gruppe bezeichnet, die eine Epoxy-, Methacryloxy-, Mercapto-, Amino- oder eine Phenylgruppe umfasst; R₈ eine Alkylgruppe mit 1-4 Kohlenstoffatomen oder eine Acylgruppe mit 1-4 Kohlenstoffatomen bezeichnet; R₉ eine Alkylgruppe mit 1-6 Kohlenstoffatomen bezeichnet, und a und b eine ganze Zahl 1 oder 0 bedeuten; und die Komponente (F) kolloidale Metalloxid-Partikel darstellt.

15. Transparenter Formkörper nach einem der Ansprüche 1 bis 14, wobei der transparente Formkörper einen antireflektierenden Film auf der Oberfläche oder auf dem ausgehärteten Beschichtungsfilm aufweist.

16. Transparenter Formkörper nach Anspruch 15, **dadurch gekennzeichnet, dass** der antireflektierende Film ein vielschichtiger Film ist, und mindestens eine Schicht des vielschichtigen antireflektierenden Films einen hohen Brechungsindex aufweist und Nioboxid enthält.

17. Verfahren zur Herstellung eines transparenten Formkörpers, umfassend die Bildung eines Formkörpers durch Gießen einer Mischung der Komponenten (A), (B), (C) und (D) nach einem der Ansprüche 1 bis 10 in eine Gußform und anschließendes Polymersieren der Komponenten (A) und (B).

18. Verfahren zur Herstellung eines transparenten Formkörpers nach Anspruch 17, wobei die Mischung durch zusätzliches Vermischen der Komponente (B) mit einer Mischung der Komponenten (A), (C) und (D) hergestellt wird.

## Revendications

1. Article moulé transparent fait d'un polymère issu des composants (A) et (B) suivants, **caractérisé en ce que** ledit polymère comprend en outre les composants (C) et (D) suivants :
le composant (A) étant un prépolymère à terminaison isocyanate sous la forme d'un produit issu de la réaction d'un diisocyanate aliphatique ayant une structure cyclique intramoléculaire et d'un diol ayant un poids moléculaire moyen de 300-2500,
le composant (B) étant une ou plusieurs diamines aromatiques de formule générale (I), dans lequel dans la formule générale (I), R₁, R₂ et R₃ représentent chacun, indépendamment, l'un quelconque parmi les groupes méthyle, éthyle ou thiométhyle,
le composant (C) étant un ou plusieurs monoesters d'acide phosphorique de formule générale (II), dans lequel dans la formule générale (II), R₄ est un groupe alkyle ayant un nombre d'atomes de carbone de 1-10 et n₁ représente 1 ou 2, et
le composant (D) étant un ou plusieurs diesters d'acide phosphorique de formule générale (III), dans lequel dans la formule générale (III), R₅ et R₆ représentent chacun, indépendamment, un groupe alkyle ayant un nombre d'atomes de carbone de 1-10 et n₂ et n₃ représentent 1 ou 2 ;

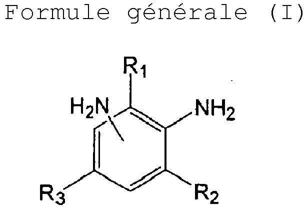

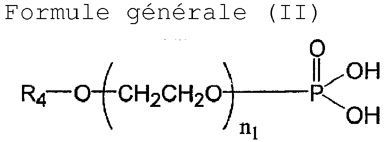

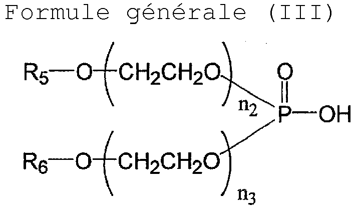

2. Article moulé transparent selon la revendication 1, dans lequel le poids total des composants (C) et (D) est compris dans la gamme allant de 0,005 à 0,1 % du poids total des composants (A), (B), (C) et (D).

3. Article moulé transparent selon la revendication 1 ou 2, dans lequel le poids du composant (C) est compris dans la gamme allant de 30 à 70 % du poids total des composants (C) et (D).

4. Article moulé transparent selon l'une quelconque des revendications 1-3, dans lequel le diisocyanate aliphatique ayant une structure cyclique intramoléculaire, c'est-à-dire une matière première du composant (A), est un diisocyanate alicyclique.

5. Article moulé transparent selon la revendication 4, dans lequel le diisocyanate alicyclique est au moins l'un sélectionné dans le groupe consistant en le 4,4'-méthylènebis(cyclohexyl isocyanate), l'isophorone diisocyanate, le 1,3-bis(isocyanatométhyl)cyclohexane et le norbornène diisocyanate.

6. Article moulé transparent selon l'une quelconque des revendications 1-5, dans lequel le diol ayant un poids moléculaire moyen de 300-2500, c'est-à-dire une matière première du composant (A), est un polyéther diol ou un polyester diol.

7. Article moulé transparent selon l'une quelconque des revendications 1-6, dans lequel la teneur en groupes isocyanate du composant (A) va de 10 à 20 % en poids.

8. Article moulé transparent selon l'une quelconque des revendications 1-7, dans lequel, dans la formule générale (I), R₁ est un groupe méthyle, et R₂ et R₃ sont, indépendamment, un groupe éthyle ou un groupe thiométhyle.

9. Article moulé transparent selon l'une quelconque des revendications 1-8, dans lequel le rapport molaire entre le groupe isocyanate du composant (A) et un groupe amino du composant (B) va de 1,00 à 1,15.

10. Article moulé transparent selon l'une quelconque des revendications 1-9, dans lequel R₄ est un groupe alkyle ayant un nombre d'atomes de carbone de 2-6 dans la formule générale (II), et R₅ et R₆ représentent chacun, indépendamment, un groupe alkyle ayant un nombre d'atomes de carbone de 2-6 dans la formule générale (III).

11. Article moulé transparent selon l'une quelconque des revendications 1-10, dans lequel l'article moulé transparent est une lentille.

12. Article moulé transparent selon la revendication 11, dans lequel la lentille est une lentille pour lunetterie.

13. Article moulé transparent selon l'une quelconque des revendications 1-12, dans lequel ledit article moulé transparent a, en surface, un film de revêtement durci.

14. Article moulé transparent selon la revendication 13, dans lequel ledit film de revêtement durci est obtenu à partir d'une composition de revêtement comprenant des composants (E) et (F),
le composant (E) étant un composé organique du silicium de formule générale (IV) ou un produit d'hydrolyse de celui-ci,
(R₇)ₐ(R₉)_{b}Si(OR₈)_{4-(a+b)} (IV)
dans lequel, dans la formule générale (IV), R₇ est un groupe organique comprenant un groupe époxy, un groupe méthacryloxy, un groupe mercapto, un groupe amino ou un groupe phényle ; R₈ représente un groupe alkyle ayant un nombre d'atomes de carbone de 1-4 ou un groupe acyle ayant un nombre d'atomes de carbone de 1-4 ; R₉ est un groupe alkyle ayant un nombre d'atomes de carbone de 1-6 ; et a et b représentent un entier 1 ou 0 ; et
le composant (F) étant des particules colloïdales d'oxyde métallique.

15. Article moulé transparent selon l'une quelconque des revendications 1-14, ledit article moulé transparent ayant, sur sa surface ou sur ledit film de revêtement durci, un film antiréfléchissant.

16. Article moulé transparent selon la revendication 15, **caractérisé en ce que** ledit film antiréfléchissant est un film antiréfléchissant à couches multiples, et **en ce qu'**au moins une couche du film antiréfléchissant à couches multiples est une couche de fort indice de réfraction comprenant de l'oxyde de niobium.

17. Procédé de fabrication d'un article moulé transparent, comprenant la formation d'un article moulé en versant un mélange des composants (A), (B), (C) et (D) selon l'une quelconque des revendications 1 à 10 dans un moule de formation, puis en polymérisant les composants (A) et (B).

18. Procédé de fabrication d'un article moulé transparent selon la revendication 17, dans lequel ledit mélange est préparé en mélangeant, en outre, le composant (B) avec un mélange des composants (A), (C) et (D).
